(19) Europäisches Patentamt
European Patent Office
Office européen des brevets

(11) **EP 4 284 865 B1**

(12) **EUROPÄISCHE PATENTSCHRIFT**

(45) Veröffentlichungstag und Bekanntmachung des Hinweises auf die Patenterteilung:
**24.07.2024  Patentblatt 2024/30**

(21) Anmeldenummer: **22700052.8**

(22) Anmeldetag: **13.01.2022**

(51) Internationale Patentklassifikation (IPC):
**C08K 3/02** (2006.01)       **C08L 83/04** (2006.01)
**C09D 183/04** (2006.01)

(52) Gemeinsame Patentklassifikation (CPC):
(C-Sets verfügbar)
**C08L 83/04; C08K 3/02; C09D 183/04;**
C08G 77/12; C08G 77/20; C08K 2003/023;
Y02E 60/10                              (Forts.)

(86) Internationale Anmeldenummer:
**PCT/EP2022/050695**

(87) Internationale Veröffentlichungsnummer:
**WO 2022/161787 (04.08.2022 Gazette 2022/31)**

(54) **SILIZIUMHALTIGE WÄRMELEITPASTEN**

SILICON-CONTAINING THERMALLY CONDUCTIVE PASTES

PÂTES THERMOCONDUCTRICES CONTENANT DU SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2021  PCT/EP2021/052213**

(43) Veröffentlichungstag der Anmeldung:
**06.12.2023  Patentblatt 2023/49**

(73) Patentinhaber: **Wacker Chemie AG**
**81737 München (DE)**

(72) Erfinder: **KNÖR, Sebastian**
**84547 Emmerting (DE)**

(74) Vertreter: **Mieskes, Klaus Theoderich et al**
**Wacker Chemie AG**
**Intellectual Property**
**Hanns-Seidel-Platz 4**
**81737 München (DE)**

(56) Entgegenhaltungen:
**EP-B1- 1 788 031     US-A1- 2016 122 611**

(52) Gemeinsame Patentklassifikation (CPC): (Forts.)

C-Sets
**C08K 3/02, C08L 83/04;**
**C09D 183/04, C08K 5/14, C08K 3/02;**
**C09D 183/04, C08L 83/00, C08K 5/56, C08K 3/02**

C-Sets
**C08K 3/02, C08L 83/04;**
**C09D 183/04, C08L 83/00, C08K 5/56, C08K 3/02**

**Beschreibung**

Die vorliegende Erfindung betrifft wärmeleitfähige Siliconzusammensetzungen, deren Herstellung und Verwendung.

Stand der Technik

Wärmeleitfähige Siliconzusammensetzungen finden breite Anwendung für das Thermomanagement in der Automobil- und Elektronikindustrie. Wichtige Darreichungsformen umfassen beispielsweise wärmeleitfähige Klebstoffe, Wärmeleitpads, Gap Filler und Vergussmassen. Von den genannten Anwendungen stellen Gap Filler für Lithium-Ionen-Batterien von Elektrofahrzeugen volumenmäßig die mit Abstand größte Anwendung dar. Gap-Filler sind wärmeleitfähige Elastomere, die durch Fertigungstoleranzen, Bauhöhenunterschiede oder unterschiedliche Ausdehnungskoeffizienten hervorgerufene Luftspalten vollständig und dauerhaft füllen und den thermischen Widerstand beispielsweise zwischen elektronischen Bauteilen und Kühlgehäusen oder Kühlkörpern minimieren.

Der Stand-der-Technik kennt unterschiedliche thermoleitfähige Füllstoffe, die zur Erhöhung der Wärmeleitfähigkeit dem Silicon zugesetzt werden. Diese weisen jedoch gravierende Nachteile auf. Keramische Füllstoffe, wie beispielsweise Aluminiumoxid, haben eine sehr hohe Dichte und erhöhen damit das Gewicht der Bauteile sehr stark. Außerdem sind sie vergleichsweise teuer. Metallische Füllstoffe, wie beispielsweise Aluminiumpulver oder Silberpulver, sind elektrisch leitfähig, was für viele Anwendungen nicht akzeptabel ist. Viele Metalle und Legierungen sind zudem vergleichsweise teuer.

Auch viele weitere, hoch wärmeleitfähige Füllstoffe, wie beispielsweise Carbonanotubes, Bornitrid und Aluminiumnitrid, können, aufgrund ihres vergleichsweise hohen Preises, nur eingeschränkt, in geringen Mengen oder speziellen Anwendungen verwendet werden.

Der Stand der Technik kennt verschiedene wärmeleitfähige Siliconzusammensetzungen, die Siliziumpartikel als wärmeleitfähigen Füllstoff enthalten. Diese sind vergleichsweise leicht und kostengünstig. Zudem besitzt Silizium als Halbleiter eine äußerst geringe elektrische Leitfähigkeit. Allerdings sind die Siliziumpartikel nach dem Stand-der-Technik nicht für die Verwendung als Gap Filler in Lithium-Ionen-Batterien für Elektrofahrzeuge geeignet:

Die im Stand der Technik verwendeten Si-Partikel werden zumeist über Mahlverfahren gewonnen. Nachteilig ist, dass solche Partikel eine große Oberfläche haben und sehr viel Polymer binden. Dadurch erhöht sich die Viskosität der Siliconzusammensetzung sehr stark. Es können nur Mischungen mit vergleichsweise niedrigen Füllgraden und niedriger Wärmeleitfähigkeit erzeugt werden. Bei höheren Füllgraden wird die Zusammensetzung sehr steif und kann mit klassischen Verfahren, wie z.B. Dispenser, nicht mehr verarbeitet werden. Auch zeigt sich, dass Siliconzusammensetzungen enthaltend gemahlene Siliziumpartikel vergleichsweise stark brennbar sind.

Die Verwendung von Siliziumpartikel kleiner 20 $\mu$m ist nachteilig, denn solch kleine Partikel weisen eine vergleichsweise geringe Mindestzündenergie auf und sind dadurch staubexplosionsgefährlich und erfordern aufwändige und kostenintensive Sicherheitsvorkehrungen in der betrieblichen Verarbeitung.

JP2019131669A2 lehrt die Verwendung von 0,1 - 200 $\mu$m großen metallischen Si-Partikeln mit elektrisch isolierender Beschichtung als thermoleitfähige Füllstoffe für Siloxan-freie organische Harze. Die Partikel können über thermische Zersetzung, Schmelz- oder Mahlverfahren hergestellt werden, oder aus Polier- oder Schleifverfahren anfallen. Die Partikel werden in einem gesonderten Verfahrensschritt mit einer elektrisch isolierenden Beschichtung versehen. In den Beispielen offenbart JP2019131669A2 organische Harze, die bis zu 65 Vol-% gemahlene Si-Partikel mit einer mittleren Partikelgröße von 32 $\mu$m enthalten und eine Wärmeleitfähigkeit von bis zu 7 W/mK aufweisen. Nachteilig ist die Verwendung von gemahlenen Partikeln, die vergleichsweise stark brennbar sind. Die offenbarten Vulkanisate sind nicht elastisch und deswegen nicht für die Verwendung als Gap Filler in Lithium-Ionen-Batterien geeignet.

US2016122611 lehrt elektrisch und thermisch leitfähige Siliconelastomerzusammensetzungen enthaltend einen thermisch leitfähigen Füllstoff kleiner 30 $\mu$m, besonders bevorzugt 2 bis 8 $\mu$m, in Kombination mit einem Ruß. Beim thermisch leitfähigen Füllstoff kann es sich um ein Siliziumpulver handeln. Offenbart werden in den Beispielen Zusammensetzungen enthaltend bis zu 60 Gew.-% gemahlene Si-Partikel mit einer mittleren Partikelgröße von 5 $\mu$m bzw. bis zu 46 Gew.-% gemahlene Si-Partikel mit einer mittleren Partikelgröße von 40 $\mu$m. Die Wärmeleitfähigkeit der Zusammensetzungen beträgt bis zu 1,0 W/mK. Nachteilig ist die Verwendung von gemahlenen Partikeln, die vergleichsweise stark brennbar sind und nur Zusammensetzungen mit vergleichsweise geringem Füllgrad und geringer Wärmeleitfähigkeit erlauben.

US2007135555 lehrt hitzevernetzende thermisch leitfähige Siliconzusammensetzungen enthaltend sphärische metallische Si-Partikel, die über ein Schmelzverfahren hergestellt werden, oder gemahlene, metallische Si-Partikel, jeweils mit einer mittleren Partikelgröße von bis zu 100 $\mu$m, besonders bevorzugt von 2 bis 25 $\mu$m. Offenbart werden in den Beispielen Zusammensetzungen enthaltend bis zu 71 Gew.-% gemahlene Si-Partikel mit einer mittleren Partikelgröße von 12 $\mu$m bzw. bis zu 71 Gew.-% sphärische Si-Partikel mit einer mittleren Partikelgröße von 5 $\mu$m, jeweils in Kombination mit oxidischen Füllstoffen, wie z.B. $Fe_2O_3$ oder $Al_2O_3$. Die Wärmeleitfähigkeit der Zusammensetzungen beträgt bis zu 1,2 W/mK. Nachteilig ist die Verwendung von sehr kleinen Si-Partikeln, die vergleichsweise stark brennbar sind und nur Zusammensetzungen mit vergleichsweise geringem Füllgrad und geringer Wärmeleitfähigkeit erlauben.

US2007117920 lehrt hitzevernetzende thermisch leitfähige Siliconzusammensetzungen enthaltend sphärische oder gemahlene, metallische Si-Partikel mit einer mittleren Partikelgröße von 2 bis 100 $\mu$m, besonders bevorzugt 2 bis 25 $\mu$m. Offenbart werden in den Beispielen Zusammensetzungen enthaltend bis zu 67 Gew.-% gemahlene Si-Partikel mit einer mittleren Partikelgröße von 5 bis 12 $\mu$m, als alleinigen Füllstoff oder in Kombination mit $Al_2O_3$. Die Viskosität der Mischungen liegt im Bereich von 30.000 bis 260.000 mPa•s bei einer Wärmeleitfähigkeit von bis zu 1,0 W/mK. Nachteilig ist die Verwendung von sehr kleinen Si-Partikeln, die vergleichsweise stark brennbar sind und nur Zusammensetzungen mit vergleichsweise hoher Viskosität, geringem Füllgrad und geringer Wärmeleitfähigkeit erlauben.

US2001051673 lehrt hitzevernetzende thermisch leitfähige Siliconelastomerzusammensetzungen enthaltend plättchenförmige Partikel mit einer mittleren Partikelgröße von 0,1 bis 350 $\mu$m oder runde Partikel mit einer mittleren Partikelgröße von 0,1 bis 50 $\mu$m, bevorzugt 0,5 bis 20 $\mu$m, aus einer magnetischen Silicium-haltigen Fe-Si-Legierung, wobei Plättchen bevorzugt sind. Offenbart werden in den Beispielen Zusammensetzungen enthaltend 30 Vol.-% sphärische Fe-Si-Partikel, bestehend aus 97 Gew.-% Fe und 3 Gew.-% Si, mit einer mittleren Partikelgröße von 8 $\mu$m in Kombination mit 40 Vol.-% $Al_2O_3$-Partikel. Die Wärmeleitfähigkeit beträgt 4,0 W/mK. Nachteilig ist die Verwendung von sehr kleinen Fe-Si-Partikeln mit sehr hohem Eisengehalt. Dadurch sind die Partikel elektrisch leitfähig, weisen eine vergleichsweise hohe Dichte auf und sind vergleichsweise stark brennbar. Nachteilig ist zudem die Verwendung großer Mengen an $Al_2O_3$, wodurch die Dichte der Zusammensetzung sehr hoch ist.

US4292223 lehrt vernetzbare thermisch leitfähige Siliconelastomerzusammensetzungen enthaltend metallische Partikel, wie z.B. Silicium, wobei Legierungen bevorzugt sind,, mit einer mittleren Partikelgröße von 40 bis 300 $\mu$m. Die Partikel können sphärisch oder unregelmäßig geformt sein, mit einem Länge zu Breite Verhältnis von bis zu 8 (entsprechend einem Aspekt-Verhältnis (b/l) gemäß ISO 9276-6 von größer oder gleich 0,125). Daraus ergibt sich eine sehr breite Definition der möglichen Partikelform, denn die Partikel können sowohl sphärisch sein, entsprechend einem Länge zu Breite Verhältnis von 1, als auch stäbchenförmig sein, wobei die Länge um Faktor 8 größer sein kann, als die Breite. Offenbart werden Zusammensetzungen enthaltend 28 Gew.-% gemahlene Si-Partikel mit einer mittleren Partikelgröße von 44 $\mu$m, wobei das b/l Verhältnis nicht offenbart wird. Nachteilig ist die Verwendung von gemahlenen Partikeln, die vergleichsweise stark brennbar sind. Zudem weisen gemahlene Partikel eine vergleichsweise große Oberfläche auf, weswegen Zusammensetzungen enthaltend gemahlene Partikel eine vergleichsweise hohe Viskosität aufweisen und schwierig zu verarbeiten sind. Die vernetzten Materialien sind wenig flexibel und brüchig.

US2006228542 beschreibt thermisch leitfähige Elastomere, welche zwei unterschiedlich große thermisch leitfähige Füllstoffe enthalten. Das Elastomer kann u.a. ein Silicon sein. Der erste thermisch leitfähige Füllstoff wird aus einer elektrisch isolierenden und thermisch leitfähigen Keramik gebildet. Als eines von mehreren Beispielen für ein geeignetes Keramik-Material wird aus Versehen "Silicon" statt "Silica" aufgezählt. Dem Fachmann ist beim Lesen dieser Offenbarung aber ganz klar, dass tatsächlich Silica Keramiken gemeint sind, da Silizium-Metall keine Keramik ist, ihm jedoch Quarzgutkeramiken (also $SiO_2$-Keramiken) sehr wohl bekannt sind. Der erste thermisch leitfähige Füllstoff hat darüber hinaus eine monomodale Verteilung und eine mittlere Partikelgröße von mindestens 20 $\mu$m. Es wird offenbart, dass der erste Füllstoffpartikel spheroidal oder sphärisch ist, und auch hohl sein kann. Er weist eine bevorzugte mittlere Partikelgröße von 30 bis 95 $\mu$m mit einer Standardabweichung von 15 bis 40 $\mu$m auf. Dies ist eine extrem unspezifische Definition der möglichen Verteilungsbreite, so dass die Partikel eine sehr enge oder sehr breite Verteilung aufweisen könnten.

Dies zeigt sich beispielhaft mit folgenden Ausführungen: Eine Standardabweichung von 40 $\mu$m bei einer mittleren Partikelgröße von 30 $\mu$m entspricht einer sehr breiten Korngrößenverteilung, während eine Standardabweichung von 15 $\mu$m bei einer mittleren Partikelgröße von 95 $\mu$m einer sehr schmalen Korngrößenverteilung entspricht. In US2006228542 finden sich keine Lehren über den Einfluss der Standardabweichung der Korngrößenverteilung des Füllstoffs auf die Eigenschaften des Elastomers.

EP1788031 B1 offenbart eine wärmeleitende Siliconkautschukzusammensetzung, umfassend 100 Gewichtsteile einer wärmehärtbaren Organopolysiloxanzusammensetzung und 10-2000 Gewichtsteile eines metallischen Siliciumpulvers mit einer mittleren Teilchengröße von 10 bis 100 um. Die Beispiele von EP1788031 B1 setzen gemahlene Siliziumpartikel von mittlerer Partikelgrösse von 5, 10 bzw. 12 $\mu$m ein.

Aufgabe der vorliegenden Erfindung war daher die Bereitstellung wärmeleitfähiger Siliconelastomerzusammensetzungen, die die oben genannten Nachteile des Standes-der-Technik nicht zeigen, und die Eigenschaften einer geringen Dichte, niedriger Kosten und hoher Wärmeleitfähigkeit vereinen.

Diese Aufgabe wird durch die erfindungsgemäßen, vernetzbaren, wärmeleitfähigen Siliconzusammensetzungen (Y) gelöst, welche vergleichsweise große Si-Partikel enthalten mit einer mittleren Partikelgröße von 30 bis 150 $\mu$m, mit überwiegend rundlicher Form, und die gleichzeitig eine besonders große bzw. breite Partikelverteilungsbreite aufweisen. Vollkommen überraschend wurde in Experimenten gefunden, dass diese erfindungsgemäßen Siliconzusammensetzungen (Y) eine deutlich reduzierte Brennbarkeit aufweisen.

Als Si-Partikel mit "überwiegend rundlicher" Form sind im Rahmen der vorliegenden Erfindung solche zu verstehen, die eine kugelige bis ovale Form aufweisen mit glatt verlaufenden Oberflächen. Man könnte sie auch als kartoffelförmig bezeichnen. Figur 1 zeigt beispielhaft die erfindungsgemäße überwiegend rundliche Form dieser Si-Partikel. Nicht erfindungsgemäße Si-Partikel-Formen zeigen die Figur 2 mit "spratzigen" Partikeln, die Figur 3 mit "nodularen" Partikeln sowie Figur 4 mit "kantigen" und "spitzen" Partikeln. Erfindungsgemäße metallische Si-Partikel sind somit weder spratzig, nodular noch kantig oder spitz. Sie können solche Partikel aber im Umfang einer Verunreinigung enthalten, ohne dass ihre erfindungsgemäße Wirkung gestört wird.

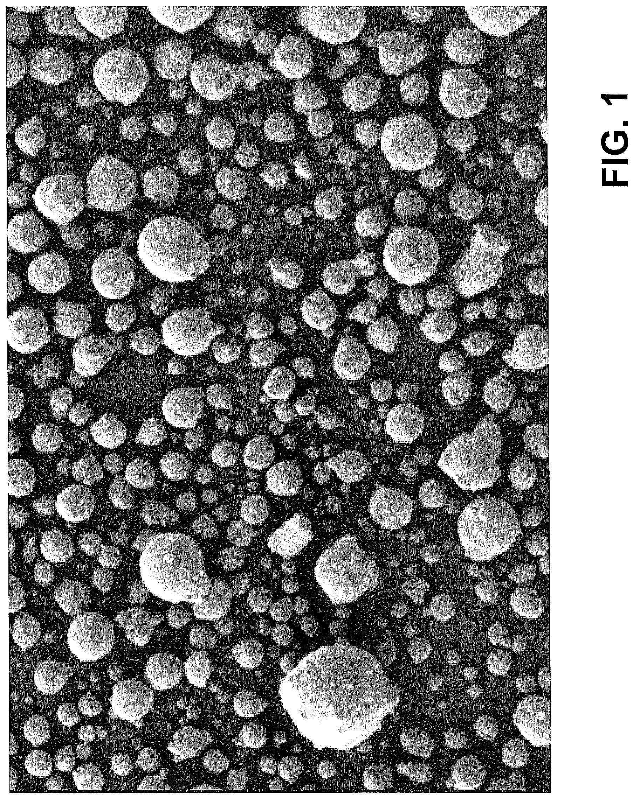

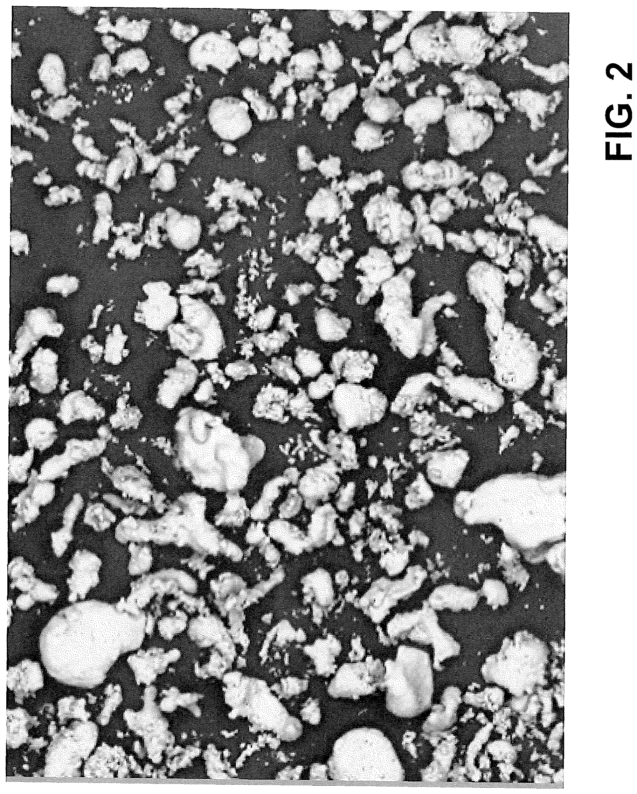

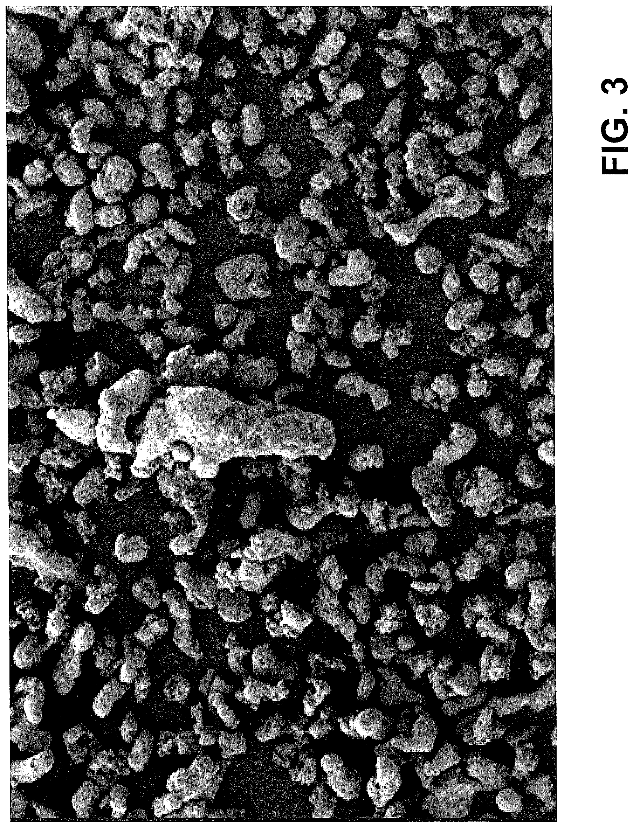

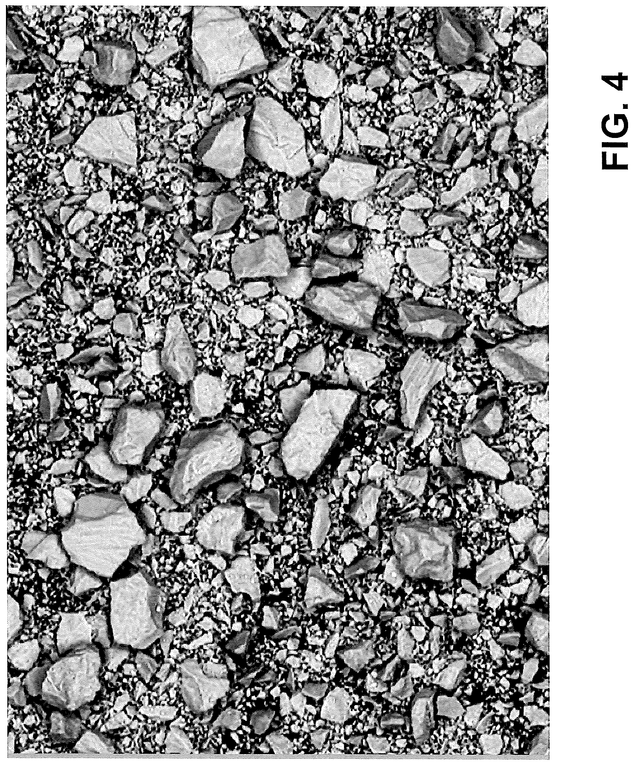

Die Eigenschaften der Si-Partikel gemäß Figuren 1 bis 4 sind zudem in folgender Tabelle wiedergegeben.

| Figur | X50 ($\mu$m) | b/l | SPHT | |
|---|---|---|---|---|
| 1 | 98 | 0, 84 | 0, 87 | erfindungsgemäß |
| 2 | 38 | 0, 68 | 0,70 | nicht erfindungsgemäß |
| 3 | 73 | 0, 67 | 0,72 | nicht erfindungsgemäß |
| 4 | 37 | 0, 67 | 0,76 | nicht erfindungsgemäß |

**Gegenstand** der vorliegenden Erfindung ist eine vernetzbare, wärmeleitfähige Siliconzusammensetzung (Y) enthaltend

5-50 Vol.-% einer vernetzbaren Siliconzusammensetzung (S) und

50-95 Vol.-% mindestens eines thermisch leitfähigen Füllstoffes (Z) mit einer Wärmeleitfähigkeit von mindestens 5 W/mK, mit der Maßgabe, dass

die vernetzbare, wärmeleitfähige Siliconzusammensetzung (Y) eine thermische Leitfähigkeit von mindestens 0,6 W/mK hat, und dass

mindestens 20 Vol-% metallische Siliziumpartikel als thermisch leitfähige Füllstoffe (Z) enthalten sind, welche folgende Merkmale erfüllen:

a) ihr mittlerer Durchmesser x50 liegt im Bereich 30-150 $\mu$m;

b) sie sind überwiegend rundlich, und dadurch gekennzeichnet, dass das Breite/Länge-Verhältnis (Aspekt-Verhältnis b/l) mindestens 0,76 beträgt;

c) ihre Verteilungsbreite SPAN ((x90-x10)/x50) ist mindestens 0,40

d) sie enthalten höchstens 1,5 Gew.-% Siliziumpartikel kleiner 2 $\mu$m.

Im Rahmen dieser Erfindung sind die Begriffe wärmeleitfähig, thermoleitfähig oder thermisch leitfähig gleichbedeutend.

Als thermisch leitfähige Füllstoffe (Z), sind im Rahmen dieser Erfindung alle Füllstoffe mit einer thermischen Leitfähigkeit von mindestens 5 W/mK zu verstehen.

Als wärmeleitfähige Siliconzusammensetzung (Y) sind im Rahmen dieser Erfindung solche Siliconzusammensetzungen zu verstehen, die die thermische Leitfähigkeit eines Füllstoff- und Additivfreien Polydimethylsiloxans, typischerweise etwa 0.2 W/mK, deutlich übertreffen, dadurch gekennzeichnet, dass sie eine thermische Leitfähigkeit von mindestens 0,6 W/mK aufweisen.

Im Rahmen dieser Erfindung beziehen sich alle Parameter, die die Partikelgröße (Parameter: mittlerer Durchmesser x50), die Partikelgrößenverteilung (Parameter: Standardabweichung Sigma und Verteilungsbreite SPAN) oder die Partikelform (Parameter: Aspekt-Verhältnis b/l und Sphärizität SPHT) beschreiben, auf eine volumenbezogene Verteilung. Die genannten Kennwerte können beispielsweise mittels dynamischer Bildanalyse gemäß ISO 13322-2 und ISO 9276-6 bestimmt werden, beispielsweise mit einem Camsizer X2 von Retsch Technology.

Dem Fachmann ist bekannt, dass die Standardabweichung nicht normiert ist und nur dann ein sinnvolles Charakteristikum zur Bewertung der Partikelgrößenverteilung unterschiedlicher Proben ist, wenn die mittleren Partikelgrößen der Vergleichsproben ungefähr gleich sind. Zur Beschreibung der relativen Breite der Partikelgrößenverteilung im Rahmen dieser Erfindung wird daher die mit der mittleren Partikelgröße x50 gewichtete Breite der Partikelgrößenverteilung verwendet, die dimensionslose Verteilungsbreite SPAN (Spanne), welche definiert ist als:

$$SPAN = (x90 - x10) / x50.$$

Das Seitenverhältnis (Aspekt-Verhältnis) dient als Kennzahl zur Beschreibung der Partikelform. Im älteren Stand der Technik wird das Aspekt-Verhältnis häufig durch das Verhältnis von Länge zu Breite (l/b) beschrieben. Daraus ergeben sich Werte von größer oder gleich 1. In der neueren Literatur, beispielsweise nach ISO 9276-6, wird das Aspekt-Verhältnis aus dem umgekehrten Verhältnis von Breite zu Länge berechnet (b/l). Daraus ergeben sich Werte von kleiner oder gleich 1. Beide Kennzahlen können durch Bildung des Kehrwerts ineinander umgerechnet werden. Im Rahmen dieser Erfindung ist das Aspekt-Verhältnis definiert als das Verhältnis der Breite zur Länge (b/l) des Partikels. Dabei ist die Partikelbreite gegeben durch $x_{c\ min}$, der kleinsten aller gemessenen maximalen Sehnen der Partikelprojektion und die Partikellänge ist gegeben durch $x_{Fe\ max}$, dem längsten Feret-Durchmesser aller gemessenen Feret-Durchmesser eines Partikels. Tiefergehende Informationen finden sich bspw. in "Operating Instructions / Manual Particle Size analysis System CAMSIZER®", Retsch Technology GmbH, 42781 Haan; Doc.Nr. CAMSIZER V0115. Daraus ergibt sich folgende Formel für das Aspekt-Verhältnis:

$$b/l = x_{c\ min} / x_{Fe\ max}$$

Die Sphärizität SPHT berechnet sich aus der Projektionsfläche A des gemessenen Partikels im Verhältnis zur Fläche eines Kreises mit dem gleichen Umfang P des projektierten Partikels gemäß folgender Formel (Tiefergehende Informationen finden sich bspw. in "Operating Instructions / Manual Particle Size analysis System CAMSIZER®", Retsch Technology GmbH, 42781 Haan; Doc.Nr. CAMSIZER V0115):

$$SPHT = 4\pi A / P^2$$

Der Kennwert SPHT entspricht dem Quadrat der Zirkularität C gemäß ISO 9276-6.

Um die Seitenzahl der Beschreibung der vorliegenden Erfindung nicht zu umfangreich zu gestalten, werden im Folgenden nur die bevorzugten Ausführungsformen der einzelnen Merkmale aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist.

**Vernetzbare Siliconzusammensetzung (S)**

Als vernetzbare Siliconzusammensetzung (S) können dem Fachmann aus dem Stand der Technik bekannten Silicone verwendet werden, wie additionsvernetzende, peroxidisch vernetzende, kondensationsvernetzende oder strahlenvernetzende Siliconzusammmensetzungen (S). Bevorzugt werden additionsvernetzende oder peroxidisch vernetzende Siliconzusammensetzungen (S) verwendet.

Peroxidisch vernetzende Siliconzusammensetzungen (S) sind dem Fachmann seit langem bekannt. Sie enthalten im einfachsten Fall wenigstens ein Organopolysiloxan mit mindestens 2 vernetzungsfähigen Gruppen pro Molekül wie beispielsweise Methyl- oder Vinylgruppen und wenigstens einen geeigneten organischen Peroxid-Katalysator. Erfolgt die Vernetzung der erfindungsgemäßen Massen mittels freier Radikale, werden als Vernetzungsmittel organische Peroxide, die als Quelle für freie Radikale dienen, eingesetzt. Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isonona-noat, Dicyclohexylperoxydicarbonat und 2,5-Dimethyl¬hexan-2,5-diperbenzoat.

Es kann eine Art von organischem Peroxid, es kann auch ein Gemisch von mindestens zwei verschiedenen Arten von organischen Peroxiden eingesetzt werden.

Besonders bevorzugt werden additionsvernetzende Siliconzusammensetzungen (S) verwendet.

Erfindungsgemäß verwendete additionsvernetzende Siliconzusammensetzungen (S) sind im Stand der Technik bekannt und enthalten im einfachsten Fall

(A) mindestens eine lineare Verbindung, die Reste mit aliphatischen Kohlenstoff-Kohlenstoff-Mehrfachbindungen aufweist,

(B) mindestens ein lineares Organopolysiloxan mit Si-gebundenen Wasserstoffatomen,

oder anstelle von (A) und (B)

(C) mindestens ein lineares Organopolysiloxan, welches SiC-gebundene Reste mit aliphatischen Kohlenstoff-Kohlenstoff Mehrfachbindungen und Si-gebundene Wasserstoffatome aufweist, und

(D) mindestens einen Hydrosilylierungskatalysator.

Bei den additionsvernetzenden Siliconzusammensetzungen (S) kann es sich um Einkomponenten-Siliconzusammensetzungen wie auch um Zweikomponenten-Siliconzusammensetzungen handeln.

Bei Zweikomponenten-Siliconzusammensetzungen (S) können die beiden Komponenten der erfindungsgemäßen, additionsvernetzenden Siliconzusammensetzungen (S) alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B) und (D) bzw. (C) und (D) enthält.

Die in den erfindungsgemäßen, additionsvernetzenden Siliconzusammensetzungen (S) eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist. Auch sind Mischungen aus (A) und (B) und (C) mit den oben genannten Verhältnissen von aliphatisch ungesättigten Resten und Si-gebundenen Wasserstoffatomen möglich.

Die erfindungsgemäße additionsvernetzende Siliconzusammensetzung (S) enthält üblicherweise 30-99,0 Gew.-%, bevorzugt 40-95 Gew.-% und besonders bevorzugt 50-90 Gew.-% (A). Die erfindungsgemäße additionsvernetzende Siliconzusammensetzung (S) enthält üblicherweise 1-70 Gew.-%, bevorzugt 3-50 Gew.-% und besonders bevorzugt 8-40 Gew.-% (B). Falls die erfindungsgemäße additionsvernetzende Siliconzusammensetzung die Komponente (C) enthält, sind üblicherweise mindestens 30 Gew.-%, bevorzugt mindestens 45 Gew.-%, besonders bevorzugt mindestens 58 Gew.-% (C) bezogen auf die Gesamtmenge an erfindungsgemäßer additionsvernetzender Siliconzusammensetzung (S) enthalten.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisoproppenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propan-trimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Tri-allyls-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die erfindungsgemäßen additionsvernetzenden Siliconzusammensetzungen (S) als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel (I)

$$R^4{}_a R^5{}_b SiO_{(4-a-b)/2} \qquad (I)$$

eingesetzt, wobei

$R^4$ unabhängig voneinander, gleich oder verschieden, ein von aliphatischen Kohlenstoff-Kohlenstoff-Mehrfachbindungen freien, organischen oder anorganischen Rest,

$R^5$ unabhängig voneinander, gleich oder verschieden einen einwertigen, substituierten oder nicht substituierten, SiC-gebundenen Kohlenwasserstoffrest mit mindestens einer aliphatischen Kohlenstoff-Kohlenstoff-Mehrfachbindung,

a 0, 1, 2 oder 3 ist, und

b 0, 1 oder 2 ist

bedeuten,

mit der Maßgabe, dass die Summe a + b kleiner oder gleich 3 ist und mindestens 2 Reste $R^5$ je Molekül vorliegen.

Bei Rest $R^4$ kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der Formel (I) miteinander verbinden.

Weitere Beispiele für $R^4$ sind die einwertigen Reste -F, -Cl, - Br, $OR^6$, -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste. Falls es sich bei Rest $R^4$ um SiC-gebundene, substituierte Kohlenwasserstoffreste handelt, sind bevorzugte Substituenten Halogenatome, phosphorhaltige Reste, Cyanoreste, $-OR^6$, $-NR^6-$, $- NR^6_2$, $-NR^6-C(O)-NR^6_2$, $-C(O)-NR^6_2$, $-C(O)R^6$, $-C(O)OR^6$, $-SO_2-Ph$ und $- C_6F_5$. Dabei bedeuten $R^6$ unabhängig voneinander, gleich oder verschieden ein Wasserstoffatom oder einen einwertigen Kohlenwasserstoffrest mit 1 bis 20 Kohlenstoffatomen und Ph gleich dem Phenylrest.

Beispiele für Reste $R^4$ sind Alkylreste, wie der Methyl-, Ethyl-, n-Propyl-, iso-Propyl-, n-Butyl-, iso-Butyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste $R^4$ sind Halogenalkylreste, wie der 3,3,3-Trifluor-n-propylrest, der 2,2,2,2′,2′,2′-Hexafluorisopropylrest, der Heptafluorisopropylrest, Halogenarylreste, wie der o-, m- und p-Chlorphenylrest, $-(CH_2)-N(R^6)C(O)NR^6_2$, $-(CH_2)_o-C(O)NR^6_2$, $-(CH_2)_o-C(O)R^6$, $-(CH_2)_o-C(O)OR^6$, $- (CH_2)_o-C(O)NR^6_2$, $-(CH_2)-C(O)-(CH_2)_pC(O)CH_3$, $-(CH_2)-O-CO-R^6$, $-(CH_2)-NR^6-(CH_2)_p-NR^6_2$, $-(CH_2)_o-O-(CH_2)_pCH (OH) CH_2OH$, $- (CH_2)_o(OCH_2CH_2)_pOR^6$, $-(CH_2)_o-SO_2-Ph$ und $-(CH_2)_o-O-C_6F_5$, wobei $R^6$ und Ph der oben dafür angegebenen Bedeutung entsprechen und o und p gleiche oder verschiedene ganze Zahlen zwischen 0 und 10 bedeuten.

Beispiele für $R^4$ gleich zweiwertige, beidseitig gemäß Formel (I) Si-gebundene Reste sind solche, die sich von den voranstehend für Rest $R^4$ genannten einwertigen Beispielen dadurch ableiten, dass eine zusätzliche Bindung durch Substitution eines Wasserstoffatoms erfolgt, Beispiele für derartige Reste sind $- (CH_2)-$, $-CH(CH_3)-$, $-C(CH_3)_2-$, $-CH(CH_3)-CH_2-$, $-C_6H_4-$, $-CH(Ph)-CH_2-$, $-C(CF_3)_2-$, $-(CH_2)_o-C_6H_4-(CH_2)_o-$, $-(CH_2)_o-C_6H_4-C_6H_4-(CH_2)_o-$, $- (CH_2O)_p$, $(CH_2CH_2O)_o$, $-(CH_2)_o-O_x-C_6H_4-SO_2-C_6H_4-O_x-(CH_2)_o-$, wobei x 0 oder 1 ist, und Ph, o und p die voranstehend genannte Bedeutung haben.

Bevorzugt handelt es sich bei Rest $R^4$ um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest $R^5$ kann es sich um beliebige, einer Anlagerungsreaktion (Hydrosilylierung) mit einer SiH-funktionellen Verbindung zugängliche Gruppen handeln.

Falls es sich bei Rest $R^5$ um SiC-gebundene, substituierte Kohlenwasserstoffreste handelt, sind als Substituenten Halogenatome, Cyanoreste und $-OR^6$ bevorzugt, wobei $R^6$ die obengenannte Bedeutung hat.

Bevorzugt handelt es sich bei Rest $R^5$ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen $10^2$ und $10^6$ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von $10^5$ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel $R^4_3SiO_{1/2}$, $R^5R^4_2SiO_{1/2}$, $R^5R^4SiO_{1/2}$ und $R^4_2SiO_{2/2}$ zusammengesetzt, wobei $R^4$ und $R^5$ die vor-

stehend angegebene Bedeutung haben. Verzweigte und netzwerkartige Polysiloxane enthalten zusätzlich trifunktionelle und/oder tetrafunktionelle Einheiten, wobei solche der Formeln $R^4SiO_{3/2}$, $R^5SiO_{3/2}$ und $SiO_{4/2}$ bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im Wesentlichen linearer Polydiorganosiloxane mit einer Viskosität von 10 bis 100 000 mPa•s, besonders bevorzugt von 15 bis 20 000 mPa•s, insbesondere bevorzugt 20 bis 2 000 mPa•s jeweils bei 25°C.

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der allgemeinen Formel (III)

$$R^4{}_cH_dSiO_{(4-c-d)/2} \qquad (III)$$

eingesetzt, wobei

$R^4$ die oben angegebene Bedeutung hat,
**c** 0, 1, 2 oder 3 ist und
**d** 0, 1 oder 2 ist,

mit der Maßgabe, dass die Summe von c + d kleiner oder gleich 3 ist und mindestens zwei Si gebundene Wasserstoffatome je Molekül vorliegen. Bevorzugt liegt mindestens ein Organopolysiloxan (B) mit mindestens drei, besonders bevorzugt mindestens vier Si gebundene Wasserstoffatome je Molekül vor.

Vorzugsweise enthält das erfindungsgemäß eingesetzte Organopolysiloxan (B) Si-gebundenen Wasserstoff im Bereich von 0,01 bis 1,7 Gewichtsprozent (Gew.-%), bezogen auf das Gesamtgewicht des Organopolysiloxans (B), bevorzugt im Bereich 0,02-0,8 Gew.-%, besonders bevorzugt im Bereich 0,03-0,3 Gew.-%.

Das Molekulargewicht des Bestandteils (B) kann ebenfalls in weiten Grenzen variieren, etwa zwischen $10^2$ und $10^6$ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel $R^4{}_3SiO_{1/2}$, $HR^4{}_2SiO_{1/2}$, $HR^4SiO_{2/2}$ und $R^4{}_2SiO_{2/2}$ zusammengesetzt, wobei $R^4$ die vorstehend angegebene Bedeutung hat. Verzweigte und netzwerkartige Polysiloxane enthalten zusätzlich trifunktionelle und/oder tetrafunktionelle Einheiten, wobei solche der Formeln $R^4SiO_{3/2}$, $HSiO_{3/2}$ und $SiO_{4/2}$ bevorzugt sind, wobei $R^4$ die vorstehend angegebene Bedeutung hat.

Selbstverständlich können auch Mischungen unterschiedlicher, den Kriterien des Bestandteils (B) genügender Siloxane eingesetzt werden. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan, oder analoge SiH-haltige Verbindungen, bei denen ein Teil der Methylgruppen durch 3,3,3-Trifluorpropyl- oder Phenylgruppen ersetzt ist.

Besonders bevorzugt als Bestandteil (B) ist die Verwendung SiH-haltiger, im Wesentlichen linearer Poly(hydrogenmethyl)siloxane und Poly(dimethylhydrogenmethyl)siloxane mit einer Viskosität im Bereich von 1 bis 100 000 mPa•s, bevorzugt im Bereich 2 bis 1 000 mPa•s, besonders bevorzugt im Bereich 3 bis 750 mPa•s, insbesondere bevorzugt im Bereich 5 bis 500 mPa•s, jeweils bei 25 °C.

Bestandteil (B) ist vorzugsweise in einer solchen Menge in den erfindungsgemäßen vernetzbaren Siliconzusammensetzungen (S) enthalten, dass das Molverhältnis von SiH-Gruppen zu aliphatisch ungesättigten Gruppen aus (A) bei 0,1 bis 10, besonders bevorzugt zwischen 0,5 und 5,0, insbesondere zwischen 0,5 und 3 liegt.

In einer insbesondere bevorzugten Ausführungsform enthält die erfindungsgemäße, additionsvernetzende Siliconzusammensetzung (S)

- mindestens ein, vorzugsweise lineares, Organopolysiloxan (B) mit mindestens drei, besonders bevorzugt mindestens vier Si gebundenen Wasserstoffatomen je Molekül, und gleichzeitig
- mindestens ein beidseitig Me2Si-H-terminiertes, lineares Polydimethylsiloxan (B),

wobei vorzugsweise mindestens 50 Gew.-% eines beidseitig $Me_2Si$-H-terminiertes, linearen Polydimethylsiloxan (B) bezogen auf die Gesamtmenge an Organopolysiloxan (B) enthalten sind.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemä-βen Siliconzusammensetzungen (S) Organopolysiloxane (C), die gleichzeitig aliphatische Kohlenstoff-Kohlenstoff-Mehrfachbindungen und Si-gebundene Wasserstoffatome aufweisen, enthalten. Auch können die erfindungsgemäßen Siliconzusammensetzungen (S) alle drei Komponenten (A), (B) und (C) enthalten.

Falls Siloxane (C) eingesetzt werden, handelt es sich vorzugsweise um solche aus Einheiten der allgemeinen Formeln (IV), (V) und (VI)

$$R^4_f SiO_{4/2} \qquad (IV)$$

$$R^4_g R^5 SiO_{3-g/2} \qquad (V)$$

$$R^4_h HSiO_{3-h/2} \qquad (VI)$$

wobei

**R^4** und **R^5** die oben dafür angegebene Bedeutung haben

**f** 0, 1, 2 oder 3 ist,

**g** 0, 1 oder 2 ist und

**h** 0, 1 oder 2 ist,

mit der Maßgabe, dass je Molekül mindestens 2 Reste $R^5$ und mindestens 2 Si-gebundene Wasserstoffatome vorliegen.

Beispiele für Organopolysiloxane (C) sind solche aus $SO_{4/2}$, $R^4_3 SiO_{1/2}$-, $R^4_2 R^5 SiO_{1/2}$- und $R^4_2 HSiO_{1/2}$- Einheiten, sogenannte MP-Harze, wobei diese Harze zusätzlich $R^4 SiO_{3/2}$- und $R^4_2 SiO$-Einheiten enthalten können, sowie lineare Organopolysiloxane im Wesentlichen bestehend aus $R^4_2 R^5 SiO_{1/2}$-, $R^4_2 SiO$- und $R^4 HSiO$-Einheiten mit $R^4$ und $R^5$ gleich der obengenannten Bedeutung.

Die Organopolysiloxane (C) besitzen vorzugsweise eine durchschnittliche Viskosität von 0,01 bis 500 000 Pa•s, besonders bevorzugt 0,1 bis 100 000 Pa•s jeweils bei 25°C. Organopolysiloxane (C) sind nach in der Chemie gängigen Methoden herstellbar.

Als Hydrosilylierungskatalysator (D) können alle dem Stand der Technik bekannten wärme- oder UV-härtenden Katalysatoren verwendet werden. Komponente (D) kann ein Platingruppenmetall sein, beispielsweise Platin, Rhodium, Ruthenium, Palladium, Osmium oder Iridium, eine metallorganische Verbindung oder eine Kombination davon. Beispiele für Komponente (D) sind Verbindungen wie Hexachloroplatin(IV)-säure, Platindichlorid, Platinacetylacetonat und Komplexe der besagten Verbindungen, die in einer Matrix oder einer kernschalenartigen Struktur eingekapselt sind. Zu den Platinkomplexen mit niedrigem Molekulargewicht der Organopolysiloxane gehören 1,3-Diethenyl-1,1,3,3-Tetramethyldisiloxan-Komplexe mit Platin. Weitere Beispiele sind Platinphosphitkomplexe oder Platinphosphinkomplexe. Für licht- oder UV-härtende Zusammensetzungen können beispielsweise Alkylplatinkomplexe wie Derivate von Cyclopentadienyltrimethylplatin(IV), Cyclooctadienyldimethylplatin(II) oder Diketonatokomplexe wie zum Beispiel Bisacetylacetonatoplatin(II) verwendet werden, um die Additionsreaktion mit Hilfe von Licht zu starten. Diese Verbindungen können in einer Harzmatrix eingekapselt sein.

Die Konzentration von Komponente (D) ist zum Katalysieren der Hydrosilylierungsreaktion der Komponenten (A) und (B) und (C) bei Einwirkung ausreichend, um die hier in dem beschriebenen Verfahren erforderliche Wärme zu erzeugen. Die Menge an Komponente (D) kann zwischen 0,1 und 1000 Teile pro Million (ppm), 0,5 und 100 ppm oder 1 und 25 ppm des Platingruppenmetalls betragen, je nach Gesamtgewicht der Komponenten. Die Härtungsrate kann gering sein, wenn der Bestandteil des Platingruppenmetalls bei unter 1 ppm liegt. Die Verwendung von mehr als 100 ppm des Platingruppenmetalls ist unwirtschaftlich oder setzt die Lagerstabilität der Siliconzusammensetzung herab.

Die additionsvernetzenden Siliconzusammensetzungen (S) können optional alle weiteren Zusatzstoffe enthalten, die auch bisher zur Herstellung von additionsvernetzbaren Zusammensetzungen eingesetzt wurden. Beispiele für aktiv verstärkende Füllstoffe (E) die nicht unter die Definition der thermisch leitfähigen Füllstoffe (Z) fallen, die als Komponente in den erfindungsgemäßen additionsvernetzenden Siliconzusammensetzungen (Y) eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe (E) können hydrophilen Charakter haben oder nach bekannten Verfahren hydrophobiert sein. Bevorzugte Füllstoffe (E) weisen infolge einer Oberflächenbehandlung einen Kohlenstoffgehalt von mindestens 0,01 bis maximal 20 Gew.-%, bevorzugt zwischen 0.1 und 10 Gew.-%, besonders bevorzugt zwischen 0,5 bis 6 Gew.-% auf.

In der erfindungsgemäßen additionsvernetzenden Siliconzusammensetzung (S) wird der Bestandteil (E) bevorzugt als einzelne oder ebenfalls bevorzugt als eine Mischung mehrerer feinteiliger Füllstoffe verwendet. Der Gehalt der erfindungsgemäßen vernetzbaren Siliconzusammensetzungen (S) an aktiv verstärkendem Füllstoff liegt im Bereich von 0 bis 50 Gew.-%, vorzugsweise bei 0 bis 30 Gew.-%, bevorzugt bei 0 bis 10 Gew.-%.

Besonders bevorzugt sind die vernetzbaren additionsvernetzenden Siliconzusammensetzungen (S) dadurch gekennzeichnet, dass der Füllstoff (E) oberflächenbehandelt ist. Die Oberflächenbehandlung wird durch die im Stand der Technik bekannten Verfahren zur Hydrophobierung feinteiliger Füllstoffe erzielt.

Die erfindungsgemäße additionsvernetzende Siliconzusammensetzung (S) kann Alkyl-trialkoxysilane (F) als weitere Zusätze enthalten, um deren Viskosität zu verringern. Sind sie enthalten, so dann vorzugsweise zu 0,1-8 Gew.-%, bevorzugt 0,2-6 Gew.-%, bezogen auf die Gesamtmasse an Siliconzusammensetzung (S), wobei die Alkylgruppe eine gesättigte oder ungesättigte, lineare oder verzweigte Alkylgruppe mit 2 bis 20, bevorzugt 8-18 C-Atomen sein kann, und die Alkoxygruppen können 1 bis 5 Kohlenstoffatome aufweisen. Beispiele für die Alkoxygruppen umfassen Methoxygruppen, Ethoxygruppen, Propoxygruppen und Butoxygruppen, wobei Methoxygruppen und Ethoxygruppen besonders bevorzugt sind. Insbesondere bevorzugt ist für (F) das n-Octyltrimethoxysilan, n-Dodecyl-trimethoxysilan, n-Hexadecyl-trimethoxysilan und das n-Octadecyl-trimethoxysilan.

Die erfindungsgemäße additionsvernetzende Siliconzusammensetzung (S) kann wahlweise als Bestandteile weitere Zusätze zu einem Anteil von bis zu 70 Gew.-%, vorzugsweise bis zu 42 Gew.-%, jeweils bezogen auf die erfindungsgemäße additionsvernetzende Siliconzusammensetzung (S) enthalten, welche sich von den erfindungsgemäßen thermisch leitfähigen Füllstoffen (Z) sowie den Zusätzen (E) und (F) unterscheiden. Diese Zusätze können z.B. inaktive Füllstoffe, harzartige Polyorganosiloxane, die von den Siloxanen (A), (B) und (C) verschieden sind, nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften, Dispergierhilfsmittel, Lösungsmittel, Haftvermittler, Pigmente, Farbstoffe, Weichmacher, organische Polymere, Hitzestabilisatoren usw. sein.

**Thermisch leitfähiger Füllstoff (Z)**

Die erfindungsgemäße vernetzbare wärmeleitfähige Siliconzusammensetzung (Y) enthält mindestens einen thermisch leitfähigen Füllstoff (Z) mit einer Wärmeleitfähigkeit von mindestens 5 W/mK, mit der Maßgabe, dass die vernetzbaren wärmeleitfähigen Siliconzusammensetzungen (Y) mindestens 20 Vol-% metallische Siliziumpartikel als thermisch leitfähige Füllstoffe (Z) enthalten, welche noch mindestens die weiteren speziellen Merkmale a) bis d) erfüllen müssen, und die Gesamtmenge thermisch leitfähiger Füllstoffe (Z) mindestens 50 Vol.-% beträgt.

a) Der mittlere Durchmesser x50 dieser erfindungsgemäßen metallischen Siliziumpartikel (Z) liegt im Bereich 30 - 150 $\mu$m, vorzugsweise im Bereich 30 - 140 $\mu$m, bevorzugt im Bereich 40 - 130 $\mu$m, besonders bevorzugt im Bereich 50 - 125 $\mu$m, insbesondere im Bereich 60 - 120 $\mu$m.

b) Die erfindungsgemäßen metallischen Siliziumpartikel (Z) sind überwiegend rundlich und werden vorzugsweise über ein Schmelzverfahren hergestellt. Die überwiegend rundliche Form der erfindungsgemäßen Partikel ist dadurch gekennzeichnet, dass das Breite/Länge-Verhältnis (Aspekt-Verhältnis b/l) mindestens 0,76, vorzugsweise mindestens 0,77, bevorzugt mindestens 0,78, insbesondere mindestens 0,79 beträgt.

Vorzugsweise weisen die erfindungsgemäßen Siliziumpartikel (Z) einen Sphärizitätswert SPHT von mindestens 0,75, vorzugsweise mindestens 0,76, bevorzugt mindestens 0,78, insbesondere bevorzugt von mindestens 0,79 auf.

In einer insbesondere bevorzugten Ausführungsform weisen die erfindungsgemäßen Siliziumpartikel (Z) ein Aspekt-Verhältnis von mindestens 0,76 und gleichzeitig einen Sphärizitätswert SPHT von mindestens 0,75, vorzugsweise mindestens 0,76, bevorzugt mindestens 0,78, insbesondere bevorzugt von mindestens 0,79 auf.

c) Die Verteilungsbreite der Partikelgröße (SPAN) ist definiert als SPAN = (x90 - x10) / x50. Der SPAN der erfindungsgemäßen metallischen Siliziumpartikel (Z) ist mindestens 0,4, bevorzugt mindestens 0,5, besonders bevorzugt mindestens 0,6, insbesondere bevorzugt mindestens 0,7. In einer bevorzugten Ausführungsform liegt der SPAN zwischen 0,7 und 2,5, insbesondere zwischen 0,75 und 2.

Dabei ist es unerheblich, ob eine einzelne Fraktion von Siliziumpartikel (Z) verwendet wird, deren SPAN im erfindungsgemäßen Bereich liegt, oder ob zwei oder mehrere Fraktionen von Siliziumpartikeln gemischt werden und dadurch die erfinderische Partikelgrößenverteilungsbreite gemäß Merkmal c) der erfinderischen Siliziumpartikel (Z) erreicht wird. Werden zwei oder mehrere Fraktionen von Siliziumpartikeln gemischt, so kann dies vor dem Vermischen mit einer oder mehreren Komponenten der erfindungsgemäßen Zusammensetzung erfolgen, oder die Fraktionen von Siliziumpartikeln können auch getrennt voneinander mit einer oder mehreren Komponenten der erfindungsgemäßen Zusammensetzung gemischt werden. Die Reihenfolge der Zugabe ist dabei egal.

Vorzugsweise werden maximal vier Fraktionen von Siliziumpartikeln gemischt und so die erfindungsgemäße Verteilungsbreite erzielt, bevorzugt werden maximal drei Fraktionen von Siliziumpartikeln gemischt und so die erfindungsgemäße Verteilungsbreite erzielt, besonders bevorzugt werden maximal zwei Fraktionen von erfindungsgemäßen Siliziumpartikeln eingesetzt und so die erfindungsgemäße Verteilungsbreite erzielt, insbesondere bevorzugt wird nur ein einzelnes, erfindungsgemäßes Siliziumpulver eingesetzt.

d) Die erfinderischen Siliziumpartikel (Z) enthalten höchstens 1,5 Gew.-% Siliziumpartikel kleiner 2 μm, bevorzugt höchstens 1 Gew.-%, besonders bevorzugt höchstens 0,5 Gew.-%, jeweils bezogen auf die Gesamtmenge an Siliziumpartikel. Insbesondere bevorzugte Siliziumpartikel sind im Wesentlichen frei von Partikelfraktionen kleiner 2 μm.

Die erfindungsgemäßen Siliziumpartikel (Z) enthalten verzugsweise weniger als 20 Gew.-%, bevorzugt weniger als 15 Gew.-%, besonders bevorzugt weniger als 10 Gew.-% einer Partikelfraktion mit einem Durchmesser von kleiner oder gleich 20 μm jeweils bezogen auf die Gesamtmenge an Siliziumpartikel.

Die erfindungsgemäßen Siliziumpartikel (Z) enthalten verzugsweise weniger als 15 Gew.-%, bevorzugt weniger als 10 Gew.-%, besonders bevorzugt weniger als 5 Gew.-% einer Partikelfraktion mit einem Durchmesser von kleiner oder gleich 10 μm jeweils bezogen auf die Gesamtmenge an Siliziumpartikel.

In einer insbesondere bevorzugten Ausführungsform findet keine beabsichtigte Zugabe von Siliziumpartikel mit einem mittleren Durchmesser von kleiner oder gleich 10 μm statt. Bevorzugt werden keine Siliziumpartikel kleiner oder gleich 15 μm zugegeben. Insbesondere bevorzugt findet keine beabsichtigte Zugabe von Siliziumpartikel mit einem mittleren Durchmesser von kleiner oder gleich 20 μm statt.

Die Verwendung von Siliziumpartikel kleiner 20 μm ist nachteilig, denn solch kleine Partikel weisen eine vergleichsweise geringe Mindestzündenergie auf und sind dadurch staubexplosionsgefährlich und erfordern aufwändige und kostenintensive Sicherheitsvorkehrungen in der betrieblichen Verarbeitung. Zudem erfüllen Gap Filler, welche solch feinteiligen Aluminiumpartikel nicht das erforderliche Brandverhalten gemäß UL94 V-0. Nachteilig an sehr feinen Siliziumpartikel oder gemahlenen ASiliziumpartikel ist außerdem, dass solche Partikel eine vergleichsweise große Oberfläche haben und sehr viel Polymer binden. Dadurch erhöht sich die Viskosität der Siliconzusammensetzung sehr stark. Es können nur Mischungen mit vergleichsweise niedrigen Füllgraden und damit niedriger Wärmeleitfähigkeit erzeugt werden. Bei höheren Füllgraden wird die Zusammensetzung sehr steif und kann mit klassischen Verfahren, wie z.B. Dispenser, nicht mehr verarbeitet werden. Auch zeigt sich, dass Siliconzusammensetzungen enthaltend gemahlene Siliziumpartikel vergleichsweise stark brennbar sind.

Metallisches Silizium weist mehrere sehr vorteilhafte Eigenschaften für die Verwendung als thermoleitfähiger Füllstoff (Z) auf. Beispielsweise verbessert die außergewöhnlich hohe Wärmeleitfähigkeit von Siliziumpartikeln (Z) die Wärmeleitfähigkeit der daraus hergestellten thermoleitfähigen Siliconzusammensetzung (Y). Die niedrige Dichte der Siliziumpartikel (Z) reduziert das Gewicht der Zusammensetzung und der daraus hergestellten Bauteile und hilft Kosten zu sparen. Die niedrige elektrische Leitfähigkeit ermöglicht die Herstellung elektrisch isolierender Bauteile und verbessert die elektrische Durchschlagsfestigkeit. Die niedrige Mohshärte der Siliziumpartikel (Z) reduziert die Abrasion bei der Verarbeitung. Dem Fachmann ist verständlich, dass die genannten Vorteile mit abnehmender Reinheit des Siliziums ganz oder teilweise verloren gehen. Die Reinheit der erfindungsgemäßen Siliziumpartikel (Z) und damit der Gehalt an Silizium beträgt mindestens 80%, bevorzugt mindestens 90%, besonders bevorzugt mindestens 95%.

Dem Fachmann ist ferner bekannt, dass metallische Siliziumpartikel unter bestimmten Bedingungen brennbar und die Stäube explosionsgefährlich sind. Der Fachmann weiß auch, dass die Gefahr der Staubbildung, die Brennbarkeit und Explosionsgefährlichkeit von Metallpulvern mit abnehmender Partikelgröße stark zunimmt. Aus diesem Grund sind sehr kleine Siliziumpartikel unter 30 μm für viele Anwendungen, beispielsweise als Füllstoff für Gap Filler in Lithium-Ionen-Batterien, nicht geeignet. Solche Partikel sind aufgrund der niedrigen Mindestzündenergie gefährlich in der Handhabung und erfordern aufwändige und kostenintensive Sicherheitsvorkehrungen in der betrieblichen Verarbeitung. Ferner zeigte sich, dass Zusammensetzungen, die sehr kleine Siliziumpartikel unter 30 μm enthalten, vergleichsweise stark brennbar sind und nicht die Brennbarkeitsklasse UL94 V-0 für Gap Filler in Lithium-Ionen-Batterien erfüllen.

Größere Siliziumpartikel mit einer mittleren Partikelgröße über 30μm weisen eine vergleichsweise hohe Mindestzündenergie auf und sind daher in betrieblichen Prozessen einfacher und sicherer verarbeitbar. Dennoch erwiesen sich Zusammensetzungen, die nicht-erfindungsgemäße gemahlene, kantige Siliziumpartikel größer 30 μm enthalten, als vergleichsweise stark brennbar und erfüllten nicht die Brennbarkeitsklasse UL94 V-0 für Gap Filler in Lithium-Ionen-Batterien.

Siliziumpartikel mit einer mittleren Partikelgröße von über 150 μm sind für viele Anwendungen von wärmeleitfähigen Siliconzusammensetzungen nicht geeignet, da solch großkörnige Siliziumpartikel häufig nicht in die feinen Spalte passen, die beispielsweise mit Gap Filler auszufüllen sind. Ferner zeigt sich, dass auch solch großkörnige Siliziumpartikel eine vergleichsweise hohe Brennbarkeit zeigen.

Die Verwendung von sphärischen Füllstoffen zur Verbesserung der Fließfähigkeit und Verarbeitbarkeit von gefüllten Polymeren ist im Stand der Technik hinreichend bekannt. Der Stand der Technik kennt jedoch nur wenige Schriften, in denen sphärische Siliziumpartikel in thermoleitfähigen Siliconzusammensetzungen verwendet werden. Die offenbarten Zusammensetzungen enthalten ausschließlich sehr kleine sphärische Siliziumpartikel mit einer mittleren Partikelgröße von weniger als 25 μm, deren Nachteile beschrieben sind.

Vollkommen überraschend hat sich gezeigt, dass die erfindungsgemäßen vernetzbaren Siliconzusammensetzungen (Y) thermisch leitfähig und gleichzeitig schwer-brennbar sind, wenn sie erfindungsgemäße metallische Siliziumpartikel, welche gleichzeitig die Merkmale a) bis d) erfüllen, in den geforderten Mindestmengen enthalten.

Die erfindungsgemäße vernetzbare Siliconzusammensetzung (Y) enthält mindestens 20 Vol-% solcher metallischer Siliziumpartikel (Z), vorzugsweise mindestens 25 Vol-%, bevorzugt mindestens 30 Vol-%, insbesondere bevorzugt mindestens 35 Vol-%. Enthält die Siliconzusammensetzung (Y) geringere Mengen metallischer Siliziumpartikel (Z), so sind die gewünschten vorteilhaften Effekte des metallischen Siliziums, beispielsweise der niedrigen Dichte und der hohen thermischen Leitfähigkeit, nicht mehr ausreichend gegeben.

Der Stand der Technik kennt verschiedene Methoden zur Erzeugung feinteiliger Metallpartikel mit rundlicher Form. Die erfindungsgemäßen Siliziumpartikel (Z) werden vorzugsweise aus einem geschmolzenen Zustand erzeugt, wodurch sie eine vergleichsweise glatte Oberfläche aufweisen und im Wesentlichen frei von Bruchstellen, scharfen Kanten und spitzen Ecken sind. Dadurch unterscheiden sie sich von herkömmlichen gemahlenen Partikeln, die beispielsweise mittels Brechen, Schleifen oder Mahlen in die finale Form gebracht wurden. Dabei ist es unerheblich, ob die Partikel in einem ersten Verfahrensschritt kalt zerkleinert werden, beispielsweise durch Mahlung, und anschließend durch Erhitzen über den Schmelzpunkt in eine schmelzflüssige Form gebracht werden, beispielsweise durch Hitzebehandlung in einer heißen Zone, beispielsweise mittels eines Plasmas, oder ob zunächst eine Siliziumschmelze erzeugt und anschließend zerkleinert wird, beispielsweise durch Zerstäuben. Vorzugsweise werden die erfindungsgemäßen Siliziumpartikel durch Sprühen oder Zerstäuben, auch Atomisieren genannt, einer Siliziumschmelze und anschließendes Abkühlen in die erfindungsgemäße feste Form gebracht.

Geeignete Verfahren zur Erzeugung der erfindungsgemäßen Siliziumpartikel (Z) sind dem Fachmann bekannt und werden beispielsweise beschrieben in Kapitel 2.2 in "Pulvermetallurgie: Technologien und Werkstoffe, Schatt, Werner, Wieters, Klaus-Peter, Kieback, Bernd, S. 5-48, ISBN 978-3-540-681112-0, E-Book: https://doi.org/10.1007/978-3-540-68112-0_2". Bevorzugte Verfahren zur Erzeugung der erfindungsgemäßen Siliziumpartikel (Z) sind die Inertgasverdüsung, auch Gasatomisierung genannt, Druckwasserverdüsung, auch Flüssigatomisierung oder Wasserzerstäubungsverfahren genannt, oder Schmelzschleuderverfahren, auch Zentrifugalatomisierung oder Rotationszerstäubung genannt. Die beschriebenen Verfahren erlauben die Herstellung von metallischen Siliziumpartikeln in einem sehr unterschiedlichen Partikelgrößenbereich, insbesondere im Bereich der mittleren Partikelgröße von wenige Micrometer bis zu wenige Millimeter. Außerdem können die metallischen Siliziumpartikel in sehr unterschiedlicher Kornform, beispielsweise "spratzig", das heißt sehr unregelmäßig, ellipsoid oder sphärisch, und mit sehr variabler Breite der Partikelgrößenverteilung erzeugt werden. Vollkommen überraschend hat sich gezeigt, dass ausschließlich solche Siliziumpartikel erfindungsgemäße vorteilhafte Eigenschaften zeigen, insbesondere eine vergleichsweise niedrige Brennbarkeit, welche überwiegend rundlich sind und gleichzeitig die erfindungsgemäßen Merkmale a) bis derfüllen.

Vorzugsweise ist das Herstellverfahren der erfindungsgemäßen metallischen Siliziumpartikel (Z) so auszuführen, dass die Partikel in ihrer erfindungsgemäßen überwiegend rundlichen Form anfallen und somit die Merkmale a) - d) erfüllen und im Wesentlichen frei sind von spratzigen, nodularen, kantigen oder spitzen Partikeln. Die erstarrten Partikel können in einem anschließenden Verfahrensschritt gemäß gängiger Verfahren nach Größe getrennt werden, z.B. mittels Klassieren durch Sieben oder mittels Sichten. Bei diesen Verfahren können Agglomerate und verklebte Partikel getrennt werden, es werden jedoch im Wesentlichen keine Partikel zerstört. Überwiegend rundlich bzw. im Wesentlichen frei von bedeutet, dass die Anwesenheit solcher Partikel im Umfang einer "Verunreinigung" der erfindungsgemäßen Partikel (Z) toleriert wird und deren erfindungsgemäße Wirkung nicht stört.

Die erfindungsgemäße vernetzbare Siliconzusammensetzung (Y) kann neben diesen metallischen Siliziumpartikeln (Z) weitere wärmeleitfähige Füllstoffe (Z) mit Wärmeleitfähigkeit größer 5 W/mK enthalten. Beispiele für solche weitere wärmeleitfähige Füllstoffe (Z) sind Magnesiumoxid, metallisches Aluminiumpulver, metallisches Silberpulver, Zinkoxid, Bornitrid, Siliziumcarbid, Aluminiumnitrid, Aluminiumhydroxid, Aluminiumoxid, Graphit, usw. Bevorzugte weitere Füllstoffe sind Aluminiumpulver, Magnesiumoxid, Aluminiumhydroxid, Zinkoxid und Aluminiumoxid. Besonders bevorzugte Füllstoffe sind Aluminiumhydroxid und Aluminiumoxid, wobei Aluminiumhydroxid insbesondere bevorzugt ist. Die Form des weiteren Füllstoffs ist grundsätzlich nicht eingeschränkt. Die Partikel können beispielsweise sphärisch, ellipsoid, nadelförmig, röhrenförmig, plättchenförmig, faserförmig oder unregelmäßig geformt sein. Bevorzugt sind sie sphärisch, ellipsoid oder unregelmäßig geformt. Der mittlere Durchmesser der weiteren wärmeleitfähigen Füllstoffe (Z) liegt vorzugsweise im Bereich 0,01 - 150 μm, bevorzugt im Bereich 0,1 - 100 μm, besonders bevorzugt im Bereich 0,2 - 80 μm, insbesondere im Bereich 0,4 - 60 μm.

Füllstoffe mit sehr hoher Dichte sind nachteilig in der Anwendung, wie zum Beispiel in Flugzeugen und Elektrofahrzeugen, da sie das Gewicht der Bauteile sehr stark erhöhen. Vorzugsweise haben die weiteren wärmeleitfähigen Füllstoffe (Z) eine Dichte von höchstens 6,0 g/cm$^3$, bevorzugt höchstens 4,5 g/cm$^3$, besonders bevorzugt höchstens 3,0 g/cm$^3$.

In vielen Anwendungen ist eine elektrische Leitfähigkeit der wärmeleitfähigen Zusammensetzung nicht gewünscht, da diese beispielsweise zu Kurzschlüssen führen kann. Vorzugsweise enthält die erfindungsgemäße Zusammensetzung (Y) ausschließlich wärmeleitfähige Füllstoffe (Z) deren spezifischer Widerstand mindestens 1 $\Omega \cdot mm^2/m$ beträgt.

Bevorzugte erfindungsgemäße vernetzbare Siliconzusammensetzungen (Y) enthalten als thermoleitfähigen Füllstoff (Z) die erfindungsgemäßen metallischen Siliziumpartikel als alleinigen thermoleitfähigen Füllstoff (Z) oder in Kombination mit bis zu zwei weiteren thermoleitfähigen Füllstoffen (Z).Verunreinigungen von bis zu 5% gelten dabei nicht als weiterer Füllstoff (Z) .

Enthalten die bevorzugten erfindungsgemäßen Zusammensetzungen die erfindungsgemäßen metallischen Siliziumpartikel (Z) als einzigen thermisch leitfähigen Füllstoff (Z) mit einer Wärmeleitfähigkeit größer 5 W/mK, wird vorzugsweise ein Rheologiemodifier oder Verdickungsmittel zugesetzt, welches das Absetzen des Füllstoffes verhindert. Geeignete Rheologiemodifier sind dem Fachmann bekannt, wobei hydrophobe Kieselsäure wie bspw. die Komponente (E) bevorzugt ist.

Die Gesamtmenge thermisch leitfähiger Füllstoffe (Z) in der erfindungsgemäßen vernetzbaren wärmeleitfähigen Siliconzusammensetzung (Y) ist 50-95 Vol.-%, vorzugsweise 60-90 Vol.-%, bevorzugt 65-88 Vol.-%. Enthält die Siliconzusammensetzung (Y) geringere Mengen an wärmeleitfähigen Füllstoff (Z), so ist keine ausreichende Wärmeleitfähigkeit gegeben, enthält die Siliconzusammensetzung (Y) größere Mengen an wärmeleitfähigen Füllstoff (Z), dann wird die Zusammensetzung (Y) schlecht verarbeitbar, da sie hochviskos oder sogar bröselig wird.

Die unvernetzten erfindungsgemäßen wärmeleitfähigen Siliconzusammensetzungen (Y) weisen eine Wärmeleitfähigkeit von mindestens 0,6 W/mK, vorzugsweise mindestens 0,8 W/mK, bevorzugt mindestens 1,2 W/mK, insbesondere mindestens 1,5 W/mK auf.

Die Viskosität der unvernetzten erfindungsgemäßen thermoleitfähigen Siliconzusammensetzungen (Y) kann in einem sehr breiten Bereich variieren und an die Erfordernisse der Anwendung angepasst werden. Die Einstellung der Viskosität der unvernetzten erfindungsgemäßen thermoleitfähigen Siliconzusammensetzungen (Y) erfolgt vorzugsweise über den Gehalt an thermoleitfähigem Füllstoff (Z) und/oder die Zusammensetzung der Siliconzusammensetzung (S), gemäß den üblichen Methoden aus dem Stand der Technik. Diese sind dem Fachmann bekannt. Bevorzugt erfolgt die Einstellung der Viskosität über die Auswahl und Kombination der Komponenten (A), (B) und (C) und optionale Zugabe eines Rheologiemodifiers und/oder eines aktiven Füllstoffs (E) und/oder eines Alkyl-trialkoxysilans (F).

Die dynamische Viskosität der unvernetzten, thermoleitfähigen erfindungsgemäßen Siliconzusammensetzungen (Y) ist bevorzugt im Bereich 100 - 1 000 000 mPa•s, vorzugsweise im Bereich 1 000 - 750 000 mPa•s, besonders bevorzugt im Bereich 2 000 - 500 000 mPa•s, insbesondere höchstens 250 000 mPa•s, jeweils bei Scherrate D = 10 $s^{-1}$ und 25 °C.

Die Dichte der unvernetzten erfindungsgemäßen Siliconzusammensetzungen (Y) ist kleiner 3,5 g/cm$^3$, vorzugsweise kleiner 3,0 g/cm$^3$, bevorzugt kleiner 2,5 g/cm$^3$, insbesondere kleiner 2,3 g/cm$^3$.

Ein weiterer Gegenstand der vorliegenden Erfindung ist ein Verfahren zur Herstellung der erfindungsgemäßen vernetzbaren Siliconzusammensetzungen (Y) durch Vermischen der einzelnen Komponenten.

Die Komponenten können nach den üblichen kontinuierlichen und diskontinuierlichen Verfahren des Standes der Technik gemischt werden. Als Mischvorrichtung sind alle bekannten Vorrichtungen geeignet. Beispiele hierfür sind uniaxiale oder biaxiale kontinuierliche Mischer, Doppelwalzen, Ross-Mischer, Hobart-Mischer, Dental-Mischer, Planetenmischer, Kneter und Henschel-Mischer oder ähnliche Mischer. Vorzugsweise wird in einem Planetenmischer, einem Kneter oder einem kontinuierlichen Mischer gemischt. Die vernetzbare Siliconzusammensetzung (Y) kann beim Mischen optional erwärmt werden, vorzugsweise wird in einem Temperaturbereich von 15 - 40 °C gemischt. Auch die Vorgehensweise zur Herstellung der bevorzugten additionsvernetzbaren Siliconzusammensetzungen (S) ist dem Fachmann bekannt. Grundsätzlich können die Komponenten in beliebiger Reihenfolge zugegeben werden. Beispielsweise können die Komponenten e) und optional g) vorgemischt werden und anschließend mit den Komponenten a) und/oder b) gemischt werden. Dabei kann die Mischung optional auch erwärmt werden. Vorzugsweise wird mindestens eine Teilmenge von a) und das Alkoxysilan g) gemischt, anschließend der/die wärmeleitfähige(n) Füllstoff(e) (Z) eingemischt. Vorzugsweise findet die Herstellung ohne aktives Heizen statt. Die erfindungsgemäße, vernetzbare Siliconzusammensetzung (Y) kann als ein-, zwei oder mehrkomponentige Mischung bereitgestellt werden. Beispiele sind zweikomponentige wärmehärtbare Zusammensetzungen (Y) oder einkomponentige UV-vernetzbare Zusammensetzungen(Y). Dies ist dem Fachmann ebenfalls seit langem bekannt.

Die erfindungsgemäße vernetzbare Siliconzusammensetzung (Y) hat sehr gute Verarbeitungseigenschaften bezüglich Fluidität, Spaltfülleigenschaften und Schichtstärkenkontrolle und kann präzise aufgetragen werden.

Die Temperaturbedingung für die Härtung der bevorzugt durch Hydrosilylierungsreaktion härtbaren Siliconzusammensetzung (Y) ist nicht beschränkt und liegt typischerweise im Bereich von 20 bis 180 °C, vorzugsweise im Bereich von 20 bis 150 °C, bevorzugt im Bereich von 20 bis 80 °C.

**Ein weiterer Gegenstand der vorliegenden Erfindung** sind die durch Abfüllen oder Auftragen und anschließender Vernetzung/Härtung der vernetzbaren Siliconzusammensetzung erhaltenen Siliconprodukte. Die gehärteten Siliconprodukte (z.B. ein wärmeleitendes Element) zeigen eine ausgezeichnete Wärmeleitfähigkeit und exakte Schichtstärken.

Die Härte der vernetzten erfindungsgemäßen thermoleitfähigen Siliconzusammensetzungen (Y) kann in einem sehr breiten Bereich variieren und an die Erfordernisse der Anwendung angepasst werden. So werden beispielsweise für die Anwendung als Gap Filler vorzugsweise vergleichsweise weiche und flexible Produkte verwendet, während beispielsweise für die Anwendung als thermoleitfähiger Klebstoff vorzugsweise vergleichsweise harte und feste Produkte verwendet werden. Die Einstellung der Härte der vernetzten erfindungsgemäßen thermoleitfähigen Siliconzusammensetzungen (Y) erfolgt vorzugsweise über die Zusammensetzung der Siliconzusammensetzung (S), gemäß den üblichen Methoden aus dem Stand der Technik. Diese sind dem Fachmann bekannt. Bevorzugt erfolgt die Einstellung der Härte über die Auswahl und Kombination der Komponenten (A), (B) und (C) und optionale Zugabe eines verstärkenden Füllstoffs (E).

Die Härte des gehärteten Siliconproduktes liegt vorzugsweise im Bereich von 2 nach Shore 00-Methode bis 100 nach Shore A-Methode, bevorzugt im Bereich von 10 nach Shore 00-Methode bis 85 nach Shore A-Methode. Für die Anwendung als Gap Filler liegt die Härte der vernetzten erfindungsgemäßen thermoleitfähigen Siliconzusammensetzungen insbesondere bevorzugt im Bereich von 15 nach Shore 00-Methode bis 65 nach Shore A-Methode.

Die vernetzten Siliconprodukte weisen eine Wärmeleitfähigkeit von mindestens 0,6 W/mK, vorzugsweise mindestens 0,8 W/mK, bevorzugt mindestens 1,2 W/mK, insbesondere mindestens 1,5 W/mK auf.

**Ein weiterer Gegenstand der vorliegenden Erfindung ist** die Verwendung der vernetzbaren Siliconzusammensetzung als Gap Filler (=wärmeleitendes Element), Wärmeleitpad, wärmeleitfähige Klebstoffe und Vergussmassen. Insbesondere sind sie zur Verwendung als Gap Filler für Lithium-Ionen-Batterien von Elektrofahrzeugen geeignet.

Die Dichte der vernetzten erfindungsgemäßen Siliconprodukte ist kleiner 3,5 g/cm$^3$, vorzugsweise kleiner 3,0 g/cm$^3$, bevorzugt kleiner 2,5 g/cm$^3$, insbesondere kleiner 2,3 g/cm$^3$.

Vorzugsweise entsprechen die vernetzten erfindungsgemäßen Siliconprodukte der Brennbarkeitsklasse UL94 V-0.

In einer bevorzugten Ausführungsform ist die Dichte der vernetzten erfindungsgemäßen Siliconprodukte kleiner 2,5 g/cm$^3$, die Wärmeleitfähigkeit größer 1,8 W/mK und die Brennbarkeit erfüllt UL94 V-0, mit der Maßgabe, dass die dynamische Viskosität der unvernetzten erfindungsgemäßen Siliconzusammensetzungen kleiner 500 000 mPa•s, insbesondere kleiner 250 000 jeweils bei Scherrate D = 10 s$^{-1}$ und 25 °C ist.

In einer besonders bevorzugten Ausführungsform ist die Dichte der erfindungsgemäßen Siliconprodukte kleiner 2,3 g/cm$^3$, die Wärmeleitfähigkeit größer 1,8 W/mK, bevorzugt größer 3,0 W/mK und die Brennbarkeit erfüllt UL94 V-0, mit der Maßgabe, dass die dynamische Viskosität der unvernetzten erfindungsgemä-βen Siliconzusammensetzungen kleiner 500 000 mPa•s, insbesondere kleiner 250 000 jeweils bei Scherrate D = 10 s$^{-1}$ und 25 °C ist.

**Messmethoden**

**Messung der Wärmeleitfähigkeit Lambda**

Die Wärmeleitfähigkeit wird nach ASTM D5470-12 an einem TIM Tester (Steinbeis Transferzentrum Wärmemanagement in der Elektronik, Lindenstr. 13/1, 72141 Walddorfhäslach, Deutschland) bestimmt. Dabei wird der thermische Widerstand der Probe, die sich zwischen 2 Prüfzylindern befindet, durch einen konstanten Wärmefluss bestimmt. Über die Schichtdicke der Probe wird die effektive Wärmeleitfähigkeit berechnet.

Für die Messung wird die Probe mit Hilfe einer Schablone aufgetragen und die Messzylinder manuell auf eine Dicke von 1,9 - 2,0 mm zusammengefahren, danach überstehendes Material entfernt. Die Messung der Wärmeleitfähigkeit erfolgt bei konstantem Spalt von 1,8 - 1,6 - 1,4 - 1,2 - 1,0 mm. Auswertung erfolgt über eine integrierte Reporterstellung. Nach einer Plausibilitätsprüfung (Bestimmtheitsmaß der Gerade > 0,998) wird die thermische Leitfähigkeit Lambda als effektive Wärmeleitfähigkeit in W/(m*K) ausgegeben.

**Messung der dynamischen Viskosität**

Die dynamische Viskosität wurde an einem Rheometer "MCR 302" der Fa. Anton Paar nach DIN EN ISO 3219: 1994 und DIN 53019 mittels einer Fließkurve mit folgenden Parametern gemessen: Messart: T/D; Temperatur: 25,0 °C; Messelement: PP25; Messspalt: 0,50 mm; Scherrate: 0,1 - 10 s$^{-1}$; Zeit: 120 sec; Messwerte: 30. Die Viskositätsangabe in Pa•s erfolgt als Interpolationswert bei einer Schergeschwindigkeit von D = 10 s$^{-1}$.

**Messung der Dichte**

Die Dichte der unvernetzten, wärmeleitfähigen Siliconzusammensetzungen wurde gemäß ISO 1183, die Dichte der vernetzten, wärmeleitfähigen Siliconzusammensetzungen gemäß ISO 1184 ermittelt.

**Partikelgrößen- und Partikelformanalyse**

Die Analyse der Partikelgröße (mittlerer Durchmesser x50), der Partikelgrößenverteilung (Parameter: Standardabweichung Sigma und Verteilungsbreite SPAN) und der Partikelform (Parameter: Aspekt-Verhältnis b/l und Sphärizität SPHT) erfolgte mit einem Camsizer X2 von Retsch Technology (Messprinzip: Dynamische Bildanalyse) gemäß ISO 13322-2 und ISO 9276-6 (Art der Analyse: Trockenmessung von Pulvern und Granulaten; Messbereich: 0,8 $\mu$m - 30 mm; Druckluftdispergierung mit "X-Jet"; Dispergierdruck = 0,3 bar). Die Auswertungen erfolgten volumenbasiert nach dem Modell $x_{c\,min}$.

Die nachfolgenden Beispiele beschreiben die prinzipielle Ausführbarkeit der vorliegenden Erfindung, ohne jedoch diese auf die darin offenbarten Inhalte zu beschränken.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

**Beispiele**

**Übersicht der verwendeten erfindungsgemäßen und nicht-erfindungsgemäßen Siliziumpulver und Siliziumpulver-Mischungen**

In Tabelle 1 sind die Eigenschaften der in den Beispielen verwendeten erfindungsgemäßen und nicht-erfindungsgemäßen Siliziumpulver zusammengefasst.

Die erfindungsgemäßen Beispiele 1-6 verwenden erfindungsgemäße Siliziumpulver, welche mittels Inertgasatomisierung gewonnen wurden, und damit überwiegend rundlich sind, und zudem eine vergleichsweise breite, erfindungsgemäße Partikelgrößenverteilung aufweisen.

Die nicht-erfindungsgemäßen Vergleichsbeispiele V1-V4 verwenden nicht-erfindungsgemäße Siliziumpulver, welche mittels Inertgasatomisierung gewonnen wurden, und damit überwiegend rundlich sind, jedoch eine vergleichsweise schmale, nicht-erfindungsgemäße Partikelgrößenverteilung aufweisen und das erfindungsgemäße Merkmal c) nicht erfüllen.

Das nicht-erfindungsgemäße Vergleichsbeispiel V8 verwendet ein nicht-erfindungsgemäßes Siliziumpulver, welches mittels Inertgasatomisierung gewonnen wurde, jedoch eine sehr unregelmäßige, nodulare Kornform aufweist, und das erfindungsgemäße Merkmal b) nicht erfüllt.

Die nicht-erfindungsgemäßen Vergleichsbeispiele V5-V7 verwenden nicht-erfindungsgemäße Siliziumpulver, welche eine vergleichsweise breite Partikelgrößenverteilung aufweisen, jedoch mittels Mahlverfahren gewonnen wurden, und damit im Wesentlichen eckig und kantig sind und das erfindungsgemäße Merkmal b) nicht erfüllen. Das Vergleichsbeispiele V7 weist einen Gehalt an Siliciumpartikeln kleiner 2 $\mu$m von 3,8 Gew.-% auf und erfüllt damit zusätzlich nicht das Merkmal d).

**Beispiel 7: Herstellung der Siliziumpulver-Mischung 7 (erfindungsgemäß)**

100 g des nicht-erfindungsgemäßen Siliziumpulvers aus Vergleichsbeispiel V2, 200 g des nicht-erfindungsgemäßen Siliziumpulvers aus Vergleichsbeispiel V3, 400 g eines nicht-erfindungsgemäßen Siliziumpulvers, welches einen x50 von 105,4 $\mu$m, einen SPAN von 0,35, einen b/l von 0,83 und SPHT von 0,92 aufweist, 200 g eines nicht-erfindungsgemäßen Siliziumpulvers, welches einen x50 von 133,8 $\mu$m, einen SPAN von 0,25, einen b/l von 0,82 und SPHT von 0,94 aufweist, und 100 g des nicht-erfindungsgemäßen Siliziumpulvers aus Vergleichsbeispiel V4 werden mit einem handelsüblichen Laborrührwerk TYP RW 28 (IKA®-Werke GmbH & CO. KG, 79219 Staufen, Deutschland) homogen vermischt. Man erhält eine erfindungsgemäße Siliziumpulver-Mischung, welches einen x50 von 107,8 $\mu$m, einen SPAN von 0,75, einen b/l von 0,83 und SPHT von 0,91 aufweist, und die erfindungsgemäßen Merkmale a)- d) erfüllt.

**Vergleichsbeispiel V9: Herstellung der Siliziumpulver-Mischung V9 (nicht-erfindungsgemäß)**

300 g eines nicht-erfindungsgemäßen Siliziumpulvers, welches einen x50 von 133,8 $\mu$m, einen SPAN von 0,25, einen b/l von 0,82 und SPHT von 0,94 aufweist, und 600 g des nicht-erfindungsgemäßen Siliziumpulvers aus Vergleichsbeispiel V4 werden mit einem handelsüblichen Laborrührwerk TYP RW 28 (IKA®-Werke GmbH & CO. KG, 79219 Staufen, Deutschland) homogen vermischt. Man erhält eine nicht-erfindungsgemäße Siliziumpulver-Mischung, welche einen x50 von 155,1 $\mu$m, einen SPAN von 0,41, einen b/l von 0,82 und SPHT von 0,94 aufweist und das erfindungsgemäße Merkmal a) nicht erfüllt.

**Abkürzungen**

Bsp.    Beispiel

V    Vergleichsbeispiel

PF    Partikelform

r    überwiegend rundlich

e    eckig

n    nodular

E    erfindungsgemäß

NE    nicht erfindungsgemäß

n.b.    nicht bestimmt

Tabelle 1: Übersicht der verwendeten Siliziumpulver

| Bsp. | x10 (µm) | x50 (µm) | x90 (µm) | SPAN | Sigma (µm) | SPHT | PF | b/l | Bemerkung |
|---|---|---|---|---|---|---|---|---|---|
| | | Merkmal a) | | Merkmal c) | | | Merkmal b) | | |
| 1* | 17,2 | 31,5 | 43,5 | 0,83 | 10 | 0, 83 | r | 0,83 | E |
| 2* | 18,3 | 36, 1 | 55,5 | 1,03 | 14 | 0,79 | r | 0,86 | E |
| 3* | 21,8 | 49,1 | 69 | 0,96 | 38 | 0,79 | r | 0,86 | E |
| 4* | 29,2 | 66,2 | 95,3 | 1,00 | 25 | 0, 82 | r | 0,85 | E |
| 5* | 55,7 | 82,9 | 125,8 | 0,85 | 53 | 0, 86 | r | 0,83 | E |
| 6* | 100,6 | 136,8 | 169,2 | 0,50 | 55 | 0, 94 | r | 0,82 | E |
| 7* | 72,5 | 107,8 | 152,9 | 0,75 | 32 | 0,91 | r | 0,83 | E |
| V1 | 42,9 | 52,1 | 62,5 | 0,38 | 13 | 0, 82 | r | 0,85 | NE |
| V2 | 61, 1 | 68,6 | 74,7 | 0,20 | 13 | 0, 84 | r | 0,85 | NE |
| V3 | 72,6 | 82,1 | 92,2 | 0,24 | 12 | 0, 89 | r | 0,83 | NE |
| V4 | 145 | 162,1 | 181,4 | 0,22 | 16 | 0, 94 | r | 0,82 | NE |
| V5 | 10, 8 | 36, 9 | 84, 9 | 2,01 | 29 | 0,76 | e | 0,67 | NE |
| V6 | 20,1 | 95,3 | 187,5 | 1,76 | 65 | 0, 78 | e | 0,63 | NE |
| V7** | 3,1 | 5,9 | 8,8 | 0,97 | 2 | 0, 86 | e | 0,75 | NE |
| V8 | 47,0 | 72,6 | 116,1 | 0,95 | 35 | 0,72 | n | 0,67 | NE |
| V9 | 126, 3 | 155,1 | 180,1 | 0,41 | 21 | 0, 94 | r | 0,82 | NE |
| * Der Gehalt an Siliziumpartikel <2 µm betrug im Rahmen der Messgenauigkeit 0,0 Gew.-%. <br>** Der Gehalt an Siliziumpartikel <2 µm betrug 3,8 Gew.-%. | | | | | | | | | |

**Allgemeine Vorschrift 1 (AV1) zur Herstellung der vernetzten, thermoleitfähigen Siliziumpulver-haltigen Siliconformköper (erfindungsgemäße Beispiele 8 bis 14 und nicht-erfindungsgemäße Beispiele V10 bis V22)**

Schritt 1: Herstellung einer additionsvernetzbaren, thermoleitfähigen Siliziumpulver-haltigen Siliconzusammensetzung

24,5 g eines Vinyldimethylsiloxy-terminierten Polydimethylsiloxans, das eine Viskosität von 1000 mPa•s aufweist, 16,3 g eines Hydrogendimethylsiloxy-terminierten Polydimethylsiloxans, das eine Viskosität von 1000 mPa•s aufweist, 1,0 g eines Mischpolymerisats aus Dimethylsiloxy- und Methylhydrogensiloxy- und Trimethylsiloxy-Einheiten, das eine Viskosität von 200 mPa•s und einen Gehalt an Si-gebundenem Wasserstoff von 0,18 Gew.-% aufweist, wurden mittels eines SpeedMixer DAC 400 FVZ (Hauschild & Co KG, Waterkamp 1, 59075 Hamm, Deutschland) bei einer Drehzahl von 2350 U/min für 25 Sekunden homogenisiert. Danach wurde jeweils ein Siliziumpulver im Mengenverhältnis gemäß Tabelle 2 zugegeben und 25 Sekunden bei 2350 U/min mittels SpeedMixer gemischt. Die Siliziumpartikel-haltige Siliconzusammensetzung wurde mit einem Spatel durchgerührt und dabei Siliziumpulverreste vom Gefäßrand eingemischt. Anschließend wurde weitere 25 Sekunden bei 2350 U/min mittels SpeedMixer homogenisiert und auf Raumtemperatur abgekühlt.

Für die Vernetzung wurden 4,18 g ELASTOSIL® CAT PT (zu beziehen bei Wacker Chemie AG, Hanns-Seidel-Platz 4, 81737 München, Germany) zugegeben, was einem Mischungsverhältnis von 1 Teil Katalysatorlösung auf 10 Teile Siliconzusammensetzung entspricht, wobei der Anteil an thermoleitfähigem Füllstoff (Z) nicht mitgerechnet wurde. Es wurde drei Mal für 10 Sekunden bei 2350 U/min mittels SpeedMixer gemischt, wobei die Probe zwischen den Mischvorgängen jeweils mit dem Spatel umgerührt wurde. Man erhält eine reaktive, pastöse Masse, die nur wenige Stunden lagerfähig ist und direkt weiterverarbeitet wurde.

Schritt 2: Herstellung eines vernetzten, thermoleitfähigen Siliziumpulver-haltigen Siliconformköpers

Die Herstellung eines Formkörpers mit den Maßen 207 mm x 207 mm x 2 mm erfolgte mittels Pressvulkanisation in einer Edelstahlform bei 165 °C und 380 N/cm$^2$ für 5 Minuten nach den üblichen Methoden gemäß dem Stand der Technik. Das Vulkanisat wurde anschließend bei 200 °C für 4 Stunden getempert. Man erhält einen homogenen und elastischen Formkörper.

**Beispiel 15 Brennbarkeitsprüfung**

Die Brennbarkeitsprüfung erfolgt in einer vereinfachten Prüfung angelehnt an UL 94 V, ein Standard von Underwriters Laboratories zur Testung des senkrechten Verbrennens, der die Einstufung von Kunststoffen nach ihrer Flammwidrigkeit ermöglicht. Diese Methode ist die gängigste Prüfung zur Klassifizierung von flammgeschützten Kunststoffen.

Aus den erfindungsgemäßen Siliconformkörpern gemäß der Beispiele 8 bis 14 und den nicht-erfindungsgemäßen Siliconformkörpern gemäß der Vergleichsbeispiele V10 bis V14 und V19 bis V22 wurden jeweils 5" (127 mm) lange und 0,5" (12,7 mm) breite Teststücke ausgestanzt. Die Platte wird am oberen Ende in einer Länge von 1/4" in senkrechter Position befestigt. 12" (305 mm) unter der Testplatte wird ein Stück Baumwollwatte platziert. Der Brenner wird so eingestellt, dass eine blaue Flamme von einer Länge von 3/4" entsteht. Die Flamme wird aus einer Entfernung von 3/8" (9,5 mm) auf den unteren Rand der Kunststoffplatte gerichtet. Nach 10 Sekunden einwirken wird die Flamme entfernt. Die Nachbrennzeit (Gesamtzeit aus Nachbrennen und Nachglühen) des Versuchsstückes wird notiert. Die Probe sollte unmittelbar nach dem Entfernen der Flamme erlöschen und höchstens 4 Sekunden nachbrennen. Der Test wird an 5 verschiedenen Versuchsstücken durchgeführt und der Durchschnittswert der Nachbrennzeit wird ermittelt. Die Ergebnisse sind der Tabelle 2 zu entnehmen.

Bei den nicht-erfindungsgemäßen Vergleichsversuchen V15 bis V18, enthaltend jeweils 62,5 Vol.-% der nicht-erfindungsgemäßen Siliziumpartikel gemäß der Vergleichsbeispiele V5 bis V8, welche insbesondere das Merkmal b) nicht erfüllen, entstand eine sehr hochviskose Siliconzusammensetzung, welche nicht zu einem geeigneten Siliconformköper verpresst werden konnte.

Tabelle 2: Zusammensetzung und Brennbarkeit Siliziumpulver-haltiger Siliconzusammensetzungen

| Bsp. | Siliziumpulver gemäß Tabelle 1 | | | vernetzbare Siliconzusammensetzung | | Siliconformköper | | |
|---|---|---|---|---|---|---|---|---|
| | Bsp. | Menge (g) | Gehalt (Vol.-%) | Viskosität (Pa•s) | Dichte (g/cm$^3$) | Härte | Wärmeleitfähigkeit | Nachbrennzeit (s) |
| 8 | 1 | 184,0 | 62,5 | 6,1 | 1,82 | 74 | 1,7 | 3 |
| 9 | 2 | 184,0 | 62,5 | 6,3 | 1,82 | 72 | 2,0 | 1 |
| 10 | 3 | 184,0 | 62,5 | 5,9 | 1,82 | 71 | 1,9 | 0 |
| 11 | 4 | 184,0 | 62,5 | 5,0 | 1,82 | 70 | 2,0 | 2 |
| 12 | 5 | 184,0 | 62,5 | 4,8 | 1,82 | 74 | 1,8 | 0 |
| 13 | 6 | 184,0 | 62,5 | 3,8 | 1,82 | 83 | 1,8 | 2 |
| 14 | 7 | 184,0 | 62,5 | 4,1 | 1,82 | 74 | 1,9 | 2 |
| V10 | V1 | 184,0 | 62,5 | 10,1 | 1,82 | 75 | 1,9 | 6 |
| V11 | V2 | 184,0 | 62,5 | 12,5 | 1,82 | 72 | 1,9 | 15 |
| V12 | V3 | 184,0 | 62,5 | 15,3 | 1,82 | 81 | 1,9 | 5 |
| V13 | V4 | 184,0 | 62,5 | 13,2 | 1,82 | 83 | 2,0 | 9 |
| V14 | V9 | 184,0 | 62,5 | 5,2 | 1,82 | 78 | 1,9 | 20 |
| V15 | V5 | 184,0 | 62,5 | n.b. | n.b. | n.b. | n.b. | n.b. |
| V16 | V6 | 184,0 | 62,5 | n.b. | n.b. | n.b. | n.b. | n.b. |
| V17 | V7 | 184,0 | 62,5 | n.b. | n.b. | n.b. | n.b. | n.b. |
| V18 | V8 | 184,0 | 62,5 | n.b. | n.b. | n.b. | n.b. | n.b. |
| V19 | V5 | 107,3 | 49,2 | 12,7 | 1,64 | 4 | 1,1 | 21 |
| V20 | V6 | 107,3 | 49,2 | n.b. | 1,64 | 12 | 1,2 | 23 |
| V21 | V7 | 107,3 | 49,2 | n.b. | 1,64 | 31 | 1,1 | 70 |
| V22 | V8 | 107,3 | 49,2 | n.b. | 1,64 | n.b. | n.b. | 121 |

Bei der Brennbarkeitsprüfung zeigte sich, dass die Vergleichsbeispiele V10 bis V14 und V19 bis V22, enthaltend ein nicht-erfindungsgemäßes Siliziumpulver oder eine nicht-erfindungsgemäße Siliziumpulver-Mischung gemäß der Vergleichsbeispiele V1-V9, welches eines oder mehrere der Merkmale a) bis d) nicht erfüllt, eine vergleichsweise hohe Brennbarkeit zeigen. Insbesondere auffällig war die Brennbarkeit der nicht-erfindungsgemäßen Vergleichsprobe V21, enthaltend ein Siliziumpulver mit einer mittleren Partikelgröße von weniger als 20 $\mu$m und die Brennbarkeit der nicht-erfindungsgemäßen Vergleichsprobe V22, enthaltend ein Siliziumpulver mit einer sehr unregelmäßigen, nodularen Partikelform. Beide Proben brannten nach dem Entfernen der Flamme weiter bis der Formkörper komplett verbrannt war.

Vollkommen unerwartet zeigte sich, dass Siliziumpulver, die gleichzeitig die Merkmale a) - d) erfüllen, den erfindungsgemä-βen Vorteil einer reduzierten Brennbarkeit zeigen. Im erfindungsgemäßen Beispiel 14 zeigte sich zudem völlig überraschend, dass durch Mischen mehrerer nicht-erfindungsgemäßer Siliziumpulver eine erfindungsgemäße Siliziumpulver-Mischung erzeugt werden kann, welche die erfindungsgemäße vorteilhafte Eigenschaft einer geringen Brennbarkeit aufweist, sofern die erhaltene Mischung die Merkmale a) bis d) erfüllt. Im Gegensatz dazu erfüllt die nicht-erfindungsgemäße Siliziumpulver-Mischung aus dem Vergleichsbeispiel V8 nicht die Merkmale a) bis d) und zeigt auch nicht die erfindungsgemäßen Vorteile.

**Beispiel 16** Vollständige Brennbarkeitsprüfung gemäß UL 94 V

Die erfindungsgemäßen Siliconformköper aus den erfindungsgemä-βen Beispielen 11 und 12 und die nicht-erfindungsgemäßen Siliconformköper aus den nicht-erfindungsgemäßen Vergleichsbeispielen V11, V12 und V20 wurden der vollständigen Brennbarkeitsprüfung gemäß UL 94 V unterzogen und nach V-0, V-1 oder V-2 klassifiziert. Für viele technische Anwendungen, insbesondere für die Anwendung als Gap Filler in Elektrofahrzeugen ist eine Einstufung nach V-0 erforderlich. Die Ergebnisse sind der Tabelle 3 zu entnehmen.

Tabelle 3: Brennbarkeitsprüfung gemäß UL 94 V

| Bsp. | Einstufung nach UL 94 V | Bemerkung |
|---|---|---|
| 11 | V-0 | E |
| 12 | V-0 | E |
| V11 | V-1 | NE |
| V12 | V-1 | NE |
| V20 | V-2 | NE |

**Beispiel 17** Herstellung eines vernetzten, thermoleitfähigen Siliconformkörpers enthaltend eine *in-situ* Mischung von zwei Siliziumpulvern (erfindungsgemäß).

Gemäß der Allgemeinen Vorschrift AV1 wurde eine erfindungsgemäße vernetzbare thermoleitfähige Siliconzusammensetzung hergestellt, wobei als Siliziumpulver 164,90 g des erfindungsgemäßen Siliziumpulvers aus Beispiel 1 (37,6 Vol.-% bezogen auf die Gesamtmenge der thermoleitfähigen Siliconzusammensetzung) und 161,74 g eines nicht-erfindungsgemäßen Siliziumpulvers, welches einen x50 von 105,4 $\mu$m, einen SPAN von 0,35, einen b/l von 0,83 und SPHT von 0,92 aufweist, (36,8 Vol.-% bezogen auf die Gesamtmenge der thermoleitfähigen Siliconzusammensetzung) getrennt voneinander zugegeben und *in-situ* unter Bildung einer erfindungsgemäßen Siliziumpulver-Mischung vermischt wurde.

Es wurde eine erfindungsgemäße reaktive Siliconzusammensetzung mit einem Gehalt an erfindungsgemäßen Siliziumpartikeln von 74,4 Vol.-% und einer dynamischen Viskosität von 64 800 mPa•s bei Scherrate D = 10 s$^{-1}$ und 25 °C erhalten. Die thermische Leitfähigkeit betrug 4,98 W/mK und die Dichte 1,97 g/cm$^3$. Die erfindungsgemäße Masse weist eine gute Verarbeitbarkeit, eine hohe thermische Leitfähigkeit und eine niedrige Dichte auf und ist sehr gut für die Verwendung als Gap Filler geeignet. Gemäß der Allgemeinen Vorschrift AV1 wurde ein erfindungsgemä-βer, vernetzter Siliconformkörper hergestellt. Die Nachbrennzeit gemäß Beispiel 15 betrug 1,3 Sekunden. Gemäß Beispiel 16 erfolgte eine Einstufung nach UL94 V-0.

**Vergleichsbeispiel V23** Herstellung eines vernetzten Siliconformkörpers enthaltend eine *in-situ* Mischung von zwei Siliziumpulvern (nicht-erfindungsgemäß).

Gemäß dem erfindungsgemäßen Beispiel 17 wurde ein vernetzter Siliconformkörper hergestellt, jedoch wurden 19,0 Vol.-% des Siliziumpulvers aus Beispiel 1 und 18,6 Vol-% des Siliziumpulvers, welches einen x50 von 105,4 $\mu$m, einen SPAN von 0,35, einen b/l von 0,83 und SPHT von 0,92 aufweist, eingesetzt.

Der nicht-erfindungsgemäße Siliconformkörper hat einen nicht-erfindungsgemäßen Gesamtgehalt an thermoleitfähigem Füllstoff (Z) von 37,6 Vol.-% und weist eine Wärmeleitfähigkeit von 0,5 W/mK auf. Gemäß Beispiel 16 erfolgte eine Einstufung nach UL94 V-1. Die Zusammensetzung ist für die Anwendung als Gap Filler nicht geeignet.

**Beispiel 18** Zweikomponentiger Gap Filler (erfindungsgemäß) Herstellung der A-Komponente

In einem handelsüblichen Labotop Planetenmischer (PC Laborsystem GmbH, Maispracherstrasse 6, 4312 Magden, Schweiz), ausgestattet mit zwei Balkenrührern und einem Abstreifer, wurden 115,4 g eines Vinyldimethylsiloxy-terminierten Polydimethylsiloxans, das eine Viskosität von 120 mPa•s aufweist, und 1,1 g WACKER® CATALYST EP (zu beziehen bei Wacker Chemie AG, Hanns-Seidel-Platz 4, 81737 München, Germany) bei Raumtemperatur und einer Rührergeschwindigkeit von 300 U/min für 5 Minuten gemischt. 308,5 g sphärisches Aluminiumoxid DAW-05 (zu beziehen bei Denka Company Limited, Nihonbashi Mitsui Tower, 1-1, Nihonbashi-Muromachi 2-chome, Chuo-ku, Tokyo 103-8338, JAPAN) wurden zugegeben und 10 Minuten bei 300 U/min unter leichtem Vakuum (950 mbar) homogen eingearbeitet. Anschließend wurden insgesamt 578,8 g eines erfindungsgemäßen Siliziumpulvers, welches einen x50 von 78,8 $\mu$m, einen SPAN von 1,64, einen b/l von 0,81 und SPHT von 0,84 aufweist, in zwei Portionen (erste Portion 385,9 g, zweite Portion 192,9 g) zugegeben und nach jeder Zugabe wurde 10 Minuten unter leichtem Vakuum (950 mbar) bei 300 U/min gemischt. Die entstandene pastöse Masse wurde weitere 10 Minuten bei 300 U/min unter leichtem Vakuum (950 mbar) homogenisiert. Es wurde eine erfindungsgemäße A-Komponente mit einem Gehalt an erfindungsgemäßen Siliziumpartikeln von 55,5 Vol.-% und einem Gesamtgehalt an thermisch leitfähigen Füllstoff von 73,1 Vol.-% erhalten. Die pastöse Zusammensetzung weist eine Dichte von 2,25 g/cm$^3$, eine dynamische Viskosität von 59 100 mPa•s bei Scherrate D = 10 s$^{-1}$ und 25 °C und eine thermische Leitfähigkeit von 3,3 W/mK auf und ist damit für die Verwendung als Gap Filler sehr gut geeignet.

Herstellung der B-Komponente

In einem handelsüblichen Labotop Planetenmischer (PC Laborsystem GmbH, Maispracherstrasse 6, 4312 Magden, Schweiz), ausgestattet mit zwei Balkenrührern und einem Abstreifer, wurden 106,5 g eines Vinyldimethylsiloxy-terminierten Polydimethylsiloxans, das eine Viskosität von 120 mPa•s aufweist, und 9,0 g eines Mischpolymerisats aus Dimethylsiloxy- und Methylhydrogensiloxy- und Trimethylsiloxy-Einheiten, das eine Viskosität von 200 mPa•s und einem Gehalt an Si-gebundenem Wasserstoff von 0,18 Gew.-% aufweist, bei Raumtemperatur und einer Rührergeschwindigkeit von 300 U/min für 5 Minuten gemischt. 306,0 g sphärisches Aluminiumoxid DAW-05 (zu beziehen bei Denka Company Limited, Nihonbashi Mitsui Tower, 1-1, Nihonbashi-Muromachi 2-chome, Chuo-ku, Tokyo 103-8338, JAPAN) wurden zugegeben und 10 Minuten bei 300 U/min unter leichtem Vakuum (950 mbar) homogen eingearbeitet. Anschließend wurden insgesamt 574,0 g eines erfindungsgemäßen Siliziumpulvers, welches einen x50 von 78,8 $\mu$m, einen SPAN von 1,64, einen b/l von 0,81 und SPHT von 0,84 aufweist, in zwei Portionen (erste Portion 382,7 g, zweite Portion 191,3 g) zugegeben und nach jeder Zugabe wurde 10 Minuten unter leichtem Vakuum (950 mbar) bei 300 U/min gemischt. Die entstandene pastöse Masse wurde weitere 10 Minuten bei 300 U/min unter leichtem Vakuum (950 mbar) homogenisiert. Es wurde eine erfindungsgemäße B-Komponente mit einem Gehalt an erfindungsgemäßen Siliziumpartikeln von 55,5 Vol.-% und einem Gesamtgehalt an thermisch leitfähigen Füllstoff von 73,1 Vol.-% erhalten. Die pastöse Zusammensetzung weist eine Dichte von 2,25 g/cm$^3$, eine dynamische Viskosität von 37 900 mPa•s bei Scherrate D = 10 s$^{-1}$ und 25 °C und eine thermische Leitfähigkeit von 3,7 W/mK auf und ist damit für die Verwendung als Gap Filler sehr gut geeignet.

Herstellung eines Formkörpers

Ein erfindungsgemäßer vernetzter Probekörper wurde hergestellt, indem 1 Gewichtsteil der erfindungsgemäßen A-Komponente und 1 Gewichtsteil der erfindungsgemäßen B-Komponente homogen vermischt und anschließend gemäß der Allgemeinen Vorschrift AV1 vulkanisiert wurden. Der erhaltene Formkörper weist eine Härte nach Shore A von 1,4 auf. Gemäß Beispiel 16 erfolgte eine Einstufung nach UL94 V-0. Die Zusammensetzung ist für die Anwendung als Gap Filler sehr gut geeignet.

**Patentansprüche**

1. Vernetzbare, wärmeleitfähige Siliconzusammensetzung (Y) enthaltend

   5-50 Vol.-% einer vernetzbaren Siliconzusammensetzung (S) und
   50-95 Vol.-% mindestens eines thermisch leitfähigen Füllstoffes (Z) mit einer Wärmeleitfähigkeit von mindestens 5 W/mK, mit der Maßgabe, dass
   die vernetzbare, wärmeleitfähige Siliconzusammensetzung (Y)

eine thermische Leitfähigkeit von mindestens 0,6 W/mK hat, und dass

mindestens 20 Vol-% metallische Siliziumpartikel als thermisch leitfähige Füllstoffe (Z) enthalten sind, welche folgende Merkmale erfüllen:

a) ihr mittlerer Durchmesser x50 liegt im Bereich 30 - 150 $\mu$m;

b) sie sind überwiegend rundlich, und **dadurch gekennzeichnet, dass** das Breite/Länge-Verhältnis (Aspekt-Verhältnis b/l) mindestens 0,76 beträgt;

c) ihre Verteilungsbreite SPAN ((x90-x10)/x50) ist mindestens 0,40,

d) sie enthalten höchstens 1,5 Gew.-% Siliziumpartikel kleiner 2 $\mu$m,

wobei mittlerer Durchmesser $\times$50, Breite/Länge-Verhältnis und Verteilungsbreite SPAN gemäß den in der Beschreibung angegebenen Methoden bestimmt werden.

2. Vernetzbare Siliconzusammensetzung (Y) gemäß Anspruch 1, **dadurch gekennzeichnet, dass** es sich um eine additionsvernetzende Siliconzusammensetzung handelt.

3. Vernetzbare Siliconzusammensetzung (Y) gemäß Anspruch 1 oder 2, **dadurch gekennzeichnet, dass** sie mindestens 25 Vol-% metallische Siliziumpartikel als thermisch leitfähige Füllstoffe (Z) enthält.

4. Vernetzbare Siliconzusammensetzung (Y) gemäß einem der Ansprüche 1 bis 3, **dadurch gekennzeichnet, dass** sie neben den metallischen Siliziumpartikeln nur einen oder zwei weitere thermisch leitfähige Füllstoffe (Z) enthält.

5. Vernetzbare Siliconzusammensetzung (Y) gemäß einem der Ansprüche 1 bis 4, **dadurch gekennzeichnet, dass** die metallischen Siliziumpartikel (Z) einen Sphärizitätswert SPHT von mindestens 0,75 aufweisen, wobei der Sphärizitätswert SPHT gemäß der in der Beschreibung angegebenen Methode bestimmt wird.

6. Vernetzbare Siliconzusammensetzung (Y) gemäß einem der Ansprüche 1 bis 5, **dadurch gekennzeichnet, dass** der mittlere Durchmesser x50 der metallischen Siliziumpartikel im Bereich von 40 - 130 $\mu$m liegt.

7. Vernetzbare Siliconzusammensetzung (Y) gemäß einem der Ansprüche 1 bis 6, **dadurch gekennzeichnet, dass** sie eine Wärmeleitfähigkeit von mindestens 0,8 W/mK aufweist, wobei Wärmeleitfähigkeit gemäß der in der Beschreibung angegebenen Methode bestimmt wird.

8. Vernetzbare Siliconzusammensetzung (Y) gemäß einem der Ansprüche 1 bis 7, **dadurch gekennzeichnet, dass** sie eine dynamische Viskosität von 1 000 - 750 000 mPa•s aufweist, jeweils bei Scherrate D = 10 s$^{-1}$ und 25 °C, wobei dynamische Viskosität gemäß der in der Beschreibung angegebenen Methode bestimmt wird.

9. Verfahren zur Herstellung der erfindungsgemäßen vernetzbaren Siliconzusammensetzungen gemäß einem der Ansprüche 1 bis 8 durch Vermischen der einzelnen Komponenten.

10. Siliconprodukt erhältlich durch Abfüllen oder Auftragen und anschließendes Aushärten der erfindungsgemäßen vernetzbaren Siliconzusammensetzungen gemäß einem der Ansprüche 1 bis 8.

11. Verwendung der vernetzbaren Siliconzusammensetzung gemäß einem der Ansprüche 1 bis 8 als Gap Filler (=wärmeleitendes Element), Wärmeleitpad, wärmeleitfähige Klebstoffe und Vergussmassen.

12. Verwendung gemäß Anspruch 11 als Gap Filler für Lithium-Ionen-Batterien von Elektrofahrzeugen.

**Claims**

1. Crosslinkable, heat-conducting silicone composition (Y) comprising

5-50% by volume of a crosslinkable silicone composition (S) and

50-95% by volume of at least one thermally conductive filler (Z) having a thermal conductivity of at least 5 W/mK, with the proviso that

the crosslinkable, heat-conducting silicone composition (Y) has a thermal conductivity of at least 0.6 W/mK, and that

at least 20% by volume of metallic silicon particles are present as thermally conductive fillers (Z), which fulfil the following features:

> a) their median diameter x50 is in the range of 30-150 $\mu$m;
> b) they are predominately rounded, and **characterized in that** the width/length ratio (aspect ratio w/l) is at least 0.76;
> c) their distribution range SPAN ((x90-x10)/x50) is at least 0.40,
> d) they contain not more than 1.5% by weight of silicon particles of smaller than 2 pm,

where median diameter x50, width/length ratio and distribution range SPAN are determined by the methods specified in the description.

2. Crosslinkable silicone composition (Y) according to Claim 1, **characterized in that** it is an addition-crosslinking silicone composition.

3. Crosslinkable silicone composition (Y) according to Claim 1 or 2, **characterized in that** it contains at least 25% by volume of metallic silicon particles as thermally conductive fillers (Z).

4. Crosslinkable silicone composition (Y) according to any of Claims 1 to 3, **characterized in that** it contains only one or two further thermally conductive fillers (Z) aside from the metallic silicon particles.

5. Crosslinkable silicone composition (Y) according to any of Claims 1 to 4, **characterized in that** the metallic silicon particles (Z) have a sphericity value SPHT of at least 0.75, where the sphericity value SPHT is determined by the method specified in the description.

6. Crosslinkable silicone composition (Y) according to any of Claims 1 to 5, **characterized in that** the median diameter x50 of the metallic silicon particles is in the range of 40-130 pm.

7. Crosslinkable silicone composition (Y) according to any of Claims 1 to 6, **characterized in that** it has a thermal conductivity of at least 0.8 W/mK, where thermal conductivity is determined by the method specified in the description.

8. Crosslinkable silicone composition (Y) according to any of Claims 1 to 7, **characterized in that** it has a dynamic viscosity of 1000-750 000 mPa•s, in each case at shear rate D = 10 s$^{-1}$ and 25°C, where dynamic viscosity is determined by the method specified in the description.

9. Process for producing the inventive crosslinkable silicone compositions according to any of Claims 1 to 8 by mixing the individual components.

10. Silicone product obtainable by dispensing or applying and then curing the inventive crosslinkable silicone compositions according to any of Claims 1 to 8.

11. Use of the crosslinkable silicone composition according to any of Claims 1 to 8 as a gap filler (= heat-conducting element), heat-conducting pad, heat-conducting adhesives and encapsulating compounds.

12. Use according to Claim 11 as a gap filler for lithium ion batteries of electrical vehicles.


**Revendications**

1. Composition (Y) réticulable, thermoconductrice, de silicone, contenant

> 5-50% en volume d'une composition (S) réticulable de silicone et
> 50-95% en volume d'au moins une charge (Z) thermiquement conductrice présentant une conductibilité thermique d'au moins 5 W/mK, sous réserve que
> la composition (Y) réticulable, thermoconductrice de silicone présente une conductibilité thermique d'au moins 0,6 W/mK et que
> au moins 20% en volume de particules de silicium métallique soient contenues en tant que charges (Z) thermiquement conductrices, qui répondent aux caractéristiques suivantes :

a) leur diamètre moyen x50 est situé dans la plage de 30-150 µm ;

b) elles sont essentiellement rondes et **caractérisées en ce que** le rapport largeur/longueur (rapport d'aspect b/l) est d'au moins 0,76 ;

c) leur largeur de distribution SPAN ((x90-x10)/x50) est d'au moins 0,40,

d) elles contiennent au plus 1,5% en poids de particules de silicium inférieures à 2 pm,

le diamètre moyen x50, le rapport largeur/longueur et la largeur de distribution SPAN étant déterminés selon les méthodes indiquées dans la description.

2. Composition (Y) réticulable de silicone selon la revendication 1, **caractérisée en ce qu'**il s'agit d'une composition de silicone réticulant par addition.

3. Composition (Y) réticulable de silicone selon la revendication 1 ou 2, **caractérisée en ce qu'**elle contient au moins 25% en volume de particules de silicium métallique en tant que charges (Z) thermiquement conductrices.

4. Composition (Y) réticulable de silicone selon l'une des revendications 1 à 3, **caractérisée en ce qu'**elle ne contient, outre les particules de silicium métallique, qu'une ou deux autres charges (Z) thermiquement conductrices.

5. Composition (Y) réticulable de silicone selon l'une des revendications 1 à 4, **caractérisée en ce que** les particules (Z) de silicium métallique présentent une valeur de sphéricité SPHT d'au moins 0,75, la valeur de sphéricité SPHT étant déterminée selon la méthode indiquée dans la description.

6. Composition (Y) réticulable de silicone selon l'une des revendications 1 à 5, **caractérisée en ce que** le diamètre moyen x50 des particules de silicium métallique se situe dans la plage de 40-130 pm.

7. Composition (Y) réticulable de silicone selon l'une des revendications 1 à 6, **caractérisée en ce qu'**elle présente une conductibilité thermique d'au moins 0,8 W/mK, la conductibilité thermique étant déterminée selon la méthode indiquée dans la description.

8. Composition (Y) réticulable de silicone selon l'une des revendications 1 à 7, **caractérisée en ce qu'**elle présente une viscosité dynamique de 1000-750 000 mPa•s, à chaque fois à un taux de cisaillement D = 10 s$^{-1}$ et à 25°C, la viscosité dynamique étant déterminée selon la méthode indiquée dans la description.

9. Procédé pour la préparation des compositions réticulables de silicone selon l'invention selon l'une des revendications 1 à 8, par mélange des différents composants.

10. Produit de silicone, pouvant être obtenu par transvasement ou application et durcissement consécutif des compositions réticulables de silicone selon l'invention selon l'une des revendications 1 à 8.

11. Utilisation de la composition réticulable de silicone selon l'une des revendications 1 à 8 comme matériau de remplissage ("Gap Filler"), patch thermique, adhésifs thermoconducteurs et masses de moulage.

12. Utilisation selon la revendication 11 comme matériau de remplissage pour des batteries lithium-ion de véhicules électriques.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2019131669 A
- US 2016122611 A
- US 2007135555 A
- US 2007117920 A
- US 2001051673 A
- US 4292223 A
- US 2006228542 A
- EP 1788031 B1

**In der Beschreibung aufgeführte Nicht-Patentliteratur**

- **SCHATT, WERNER ; WIETERS, KLAUS-PETER ; KIEBACK, BERND.** Pulvermetallurgie: Technologien und Werkstoffe. 5-48